(19) Europäisches Patentamt
European Patent Office
Office européen des brevets

(11) **EP 4 316 935 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
***B60W 30/18*** *(2012.01)*    ***B60W 60/00*** *(2020.01)*
***G08G 1/16*** *(2006.01)*    ***G08G 1/052*** *(2006.01)*

(21) Application number: **21933903.3**

(86) International application number:
**PCT/CN2021/084772**

(22) Date of filing: **31.03.2021**

(87) International publication number:
**WO 2022/205243 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **WANG, Zhewen**
**Shenzhen, Guangdong 518129 (CN)**
• **CHEN, Rui**
**Shenzhen, Guangdong 518129 (CN)**
• **WU, Xi**
**Shenzhen, Guangdong 518129 (CN)**
• **SHEN, Jiawei**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND APPARATUS FOR OBTAINING LANE CHANGE AREA**

(57) A lane change region obtaining method is provided and includes: obtaining reference lane change duration, where the reference lane change duration is duration required for a ego-vehicle to travel from a current location to an adjacent lane through lane change, that is, duration required for the ego-vehicle to change a lane to the adjacent lane; obtaining environmental information of the adjacent lane; and obtaining at least one first lane change region in the adjacent lane based on the environmental information and the reference lane change duration, where the first lane change region is a region that is in the adjacent lane and that satisfies lane change of the ego-vehicle. According to the lane change region obtaining method, a lane change region available to a vehicle is accurately and quickly obtained, to improve a lane change success rate and safety of the vehicle. A lane change region obtaining apparatus is further provided.

```
┌─────────────────────────────────────┐
│ Calculate reference lane change      │──── 601
│ duration                             │
└─────────────────────────────────────┘
                   │
                   ▼
┌─────────────────────────────────────┐
│ Obtain environmental information of  │──── 602
│ an adjacent lane                     │
└─────────────────────────────────────┘
                   │
                   ▼
┌─────────────────────────────────────┐
│ Predict, based on information about  │──── 603
│ an obstacle in the adjacent lane, a  │
│ location of the obstacle in the      │
│ adjacent lane after the reference    │
│ lane change duration                 │
└─────────────────────────────────────┘
                   │
                   ▼
┌─────────────────────────────────────┐
│ Determine at least one lane change   │──── 604
│ region in the adjacent lane based on │
│ the predicted location of the        │
│ obstacle                             │
└─────────────────────────────────────┘
                   │
                   ▼
┌─────────────────────────────────────┐
│ Determine information about an       │──── 605
│ obstacle adjacent to the at least    │
│ one lane change region              │
└─────────────────────────────────────┘
                   │
                   ▼
┌─────────────────────────────────────┐
│ Select one or more available lane    │──── 606
│ change regions from the at least one │
│ lane change region based on the      │
│ information about the obstacle       │
│ adjacent to the at least one         │
│ available region                     │
└─────────────────────────────────────┘
                   │
                   ▼
┌─────────────────────────────────────┐
│ If there are a plurality of          │──── 607
│ available lane change regions,       │
│ evaluate each available lane change  │
│ region                               │
└─────────────────────────────────────┘
                   │
                   ▼
┌─────────────────────────────────────┐
│ Select a target lane change region   │──── 608
│ from the plurality of available lane │
│ change regions based on evaluation   │
│ values                               │
└─────────────────────────────────────┘
                   │
                   ▼
┌─────────────────────────────────────┐
│ Plan a travel path for travel of a   │──── 609
│ current vehicle to the target lane   │
│ change region, and control the       │
│ current vehicle to travel based on   │
│ the planned travel path              │
└─────────────────────────────────────┘
```

FIG. 6

EP 4 316 935 A1

**Description**

**TECHNICAL FIELD**

This application relates to the field of intelligent vehicles, and in particular, to a lane change region obtaining method and apparatus.

**BACKGROUND**

With increasing maturity and popularity of an autonomous driving function, people travel more conveniently. To pursue a higher and more appropriate travel speed and further reduce driving pressure of a driver, a vehicle needs to perform an automatic lane change function at proper time, to travel in a more appropriate lane.

Generally, a traffic condition on a road is complex, and blind lane change usually causes a serious traffic accident. Therefore, how to perform lane change more safely and efficiently becomes an urgent problem to be resolved.

**SUMMARY**

Embodiments of this application provide a lane change region obtaining method and apparatus, to accurately and quickly obtain a lane change region available to a vehicle and improve a lane change success rate and safety of the vehicle.

According to a first aspect, this application provides a lane change region obtaining method, including: obtaining reference lane change duration, where the reference lane change duration is duration required for a ego-vehicle to travel from a current location to an adjacent lane through lane change, that is, duration required for the ego-vehicle to change a lane to the adjacent lane; obtaining environmental information of the adjacent lane, where the environmental information includes information about a dynamic or static object such as a vehicle, a pedestrian, or a warning sign in the adjacent lane; and obtaining at least one first lane change region in the adjacent lane based on the environmental information and the reference lane change duration, where the first lane change region is a region that is in the adjacent lane and that satisfies lane change of the ego-vehicle. It may be understood that the at least one first lane change region includes a region in which the ego-vehicle is located in the adjacent lane after the ego-vehicle travels from the current location to the adjacent lane through lane change.

Therefore, in this implementation of this application, duration required for lane change of the ego-vehicle, that is, the reference lane change duration, is first calculated. The environmental information of the adjacent lane is obtained. The environmental information includes information about various obstacles in the adjacent lane, such as a pedestrian, a vehicle, or a road sign. Then, an available region, that is, a region in which there is no obstacle, in the adjacent lane is planned based on the environmental information and the reference lane change duration, and the region is used as a lane change region. The lane change region includes a location of the ego-vehicle in the adjacent lane after lane change. Therefore, in this implementation of this application, the available region in the adjacent lane is determined based on the duration required for lane change of the ego-vehicle. In this way, a more effective lane change region is obtained, and a lane change success rate and safety of the ego-vehicle are improved.

In a possible implementation, the obtaining at least one first lane change region in the adjacent lane based on the environmental information and the reference lane change duration may specifically include: obtaining a predicted location, in the adjacent lane, of at least one traffic participant in the adjacent lane based on the environmental information and the reference lane change duration, and then obtaining the at least one first lane change region in the adjacent lane based on the predicted location.

Therefore, in this implementation of this application, the duration required for lane change of the ego-vehicle is first calculated. Then, a location of an obstacle in the lane after the duration is predicted. The available region, that is, the region in which there is no obstacle, in the adjacent lane is planned based on the location, and the region is used as the lane change region. In this way, an accurate and available lane change region is obtained.

In a possible implementation, after the obtaining a first lane change region in the adjacent lane, the method may further include: obtaining information about at least one traffic participant adjacent to the at least one first lane change region; determining a probability that the at least one traffic participant occupies the at least one first lane change region; and selecting at least one second lane change region from the at least one first lane change region based on the probability.

In this implementation of this application, information about an obstacle adjacent to the lane change region may be detected. A probability that the lane change region is occupied is determined. Then, an available lane change region is selected based on the probability. For example, a lane change region whose occupancy probability is less than a preset probability may be selected, to obtain one or more available lane change regions. Alternatively, a size or a range of the first lane change region is adjusted based on the occupancy probability, to obtain a new second lane change region. Therefore, in this implementation of this application, the available lane change region is selected based on the probability that the lane change region is occupied. In this way, the lane change success rate and the safety of the ego-vehicle are improved.

In a possible implementation, after the selecting at least one second lane change region from the at least one first lane change region based on the probability, the method may further include: adjusting a size of the at least one second lane change region based on a speed or an acceleration of the at least one traffic participant, to obtain at least one updated second lane change region.

Therefore, in this implementation of this application, the available lane change region may be adjusted based on a speed and an acceleration of an obstacle. In this way, the available lane change region may be adaptively adjusted with the speed or the acceleration of the obstacle, and may adapt to various scenarios such as a speed change or an acceleration change. Therefore, the obtained available lane change region is more effective, and the lane change success rate of the ego-vehicle is improved.

In a possible implementation, the adjusting a size of the second lane change region may include: calculating, based on one or more of the speed or the acceleration of the at least one traffic participant, a speed range corresponding to the adjacent lane, a speed of the ego-vehicle, or a maximum acceleration of the ego-vehicle, a safe distance between the ego-vehicle and an adjacent vehicle after the ego-vehicle travels to each region, where the speed range corresponding to the adjacent lane is a range of a speed of a vehicle traveling in the adjacent lane, and the maximum acceleration of the ego-vehicle is a maximum value of an acceleration of the ego-vehicle; and adjusting the size of the at least one second lane change region based on the safe distance, to obtain the at least one updated second lane change region.

Therefore, in this implementation of this application, a size of the available lane change region may be adjusted based on a safe distance. In this way, when the ego-vehicle travels to an updated available lane change region through lane change, a safe distance between the ego-vehicle and an adjacent vehicle is greater than a preset distance. Therefore, travel safety of the ego-vehicle is improved.

In a possible implementation, information about any one of the at least one traffic participant includes one or more of the following: turn signal identification information, a lateral distance between the traffic participant and an adjacent lane line, information about the adjacent lane line (information such as a solid line or a dashed line), or a lateral speed of the traffic participant. The turn signal identification information identifies whether the traffic participant turns on a turn signal. The adjacent lane line is a lane line that is of the adjacent lane and that is close to the traffic participant. The lateral speed of the traffic participant is a speed of the traffic participant relative to the lane line.

Therefore, in this implementation of this application, when whether the lane change region is occupied by the obstacle is calculated, the probability that the lane change region is occupied may be determined with reference to information such as a turn signal and a lateral speed of the obstacle, and a lane line (for example, a solid line or a dashed line), to adjust or select the lane change region. In this way, a finally obtained lane change region is more effective, and the lane change success rate of the ego-vehicle is improved.

In a possible implementation, if there are a plurality of second lane change regions, the method may further include: evaluating each second lane change region based on one or more of a size of each of the plurality of second lane change regions, a speed of a vehicle adjacent to each second lane change region, a distance between each second lane change region and the ego-vehicle, or a direction of each second lane change region relative to the ego-vehicle, to obtain an evaluation value of each second lane change region; and selecting one of the plurality of second lane change regions as a target lane change region based on the evaluation value of each second lane change region, and controlling the ego-vehicle to travel from the current location to the target lane change region through lane change.

Therefore, in this implementation of this application, after an available lane change region with high availability is obtained, each available lane change region may be further evaluated based on a size of the lane change region, a vehicle speed of a vehicle adjacent to the lane change region, a distance between the lane change region and the ego-vehicle, a direction of the lane change region relative to the vehicle, or the like, to select an optimal lane change region as a final target lane change region, and control the ego-vehicle to travel to the target lane change region. In this way, a better and more suitable lane change region may be selected from a plurality of aspects such as safety of the ego-vehicle, the lane change success rate, and user experience, to improve user experience.

In a possible implementation, the at least one traffic participant includes a vehicle adjacent to the at least one first lane change region. Therefore, in this implementation of this application, an obstacle mainly considered may be a vehicle adjacent to the lane change region. Therefore, a possibility that the ego-vehicle collides with another vehicle is reduced, and the travel safety of the ego-vehicle is improved.

In a possible implementation, the obtaining at least one first lane change region in the adjacent lane may include: obtaining the at least one first lane region in the adjacent lane based on information about at least one obstacle, the reference lane change duration, and speed limit information. The speed limit information may include a maximum speed and a minimum speed during travel in the adjacent lane. For example, the speed limit information includes one or more of the maximum speed or the minimum speed of the ego-vehicle, or a maximum speed or a minimum speed corresponding to the adjacent lane.

Therefore, in this implementation of this application, a lane change region matching a speed limit may be determined based on an environment or a speed limit range of the ego-vehicle. In this way, a vehicle speed of the ego-vehicle during lane change is within a safe range. Therefore, the travel safety of the ego-vehicle is improved.

In a possible implementation, the obtaining reference lane change duration includes: obtaining the reference lane change duration based on the speed of the ego-vehicle and a distance between the ego-vehicle and a preset location in the adjacent lane.

Therefore, in this implementation of this application, the reference lane change duration required for lane change may be calculated based on the speed of the ego-vehicle and a distance between the ego-vehicle and the adjacent lane. Compared with using constant duration, this application may flexibly adapt to more scenarios, and has a high generalization capability.

In a possible implementation, the preset location includes at least one of a center line of the adjacent lane or a lane line of the adjacent lane. Therefore, in this implementation of this application, when the reference lane change duration is calculated, a distance between the ego-vehicle and the center line or the lane line of the adjacent lane may be considered, to flexibly adapt to more scenarios.

In a possible implementation, the obtaining the reference lane change duration based on a distance between the ego-vehicle and the adjacent lane may include: obtaining the reference lane change duration based on the speed of the ego-vehicle, road condition information of the adjacent lane, and the distance between the ego-vehicle and the adjacent lane. The road condition information includes one or more of the following: a road slope in a path on which the ego-vehicle travels from the current location to the adjacent lane through lane change, a road material of the adjacent lane, a maximum speed, a minimum speed, a crosswind, or the like.

Therefore, in this implementation of this application, the environmental information is fully considered when the reference lane change duration is calculated. In this way, the calculated reference lane change duration better matches the environment. Therefore, the travel safety of the ego-vehicle and riding experience of a user may be improved.

In a possible implementation, the method may further include: displaying the at least one second lane change region on a display interface of the ego-vehicle. Therefore, in this implementation of this application, the lane change region may be further displayed on the display interface. In this way, the user may learn of a travel status of the ego-vehicle in real time. Therefore, user experience is improved.

In a possible implementation, if there are a plurality of second lane change regions, the method may further include: further displaying the plurality of second lane change regions on a display interface, so that the user selects one of the second lane change regions as the target lane change region. In this way, the user may also control a travel path of the ego-vehicle, and may further select a region that meets a user requirement based on an actual environment. Therefore, user experience is improved.

In a possible implementation, the method may further include: further displaying the obstacle on the display interface of the ego-vehicle, for example, information such as a location, a size, or a shape of the obstacle, for example, a traffic participant. In this way, the user may learn of information such as the location of the obstacle relative to the ego-vehicle or the shape or the size of the obstacle by using the obstacle displayed on the display interface. Therefore, user experience is improved.

According to a second aspect, this application provides a lane change region obtaining apparatus. The apparatus includes:

> a reference lane change duration obtaining module, configured to obtain reference lane change duration based on a speed of a ego-vehicle and a distance between the ego-vehicle and an adjacent lane, where the reference lane change duration is duration required for the ego-vehicle to travel from a current location to the adjacent lane through lane change;
> an obtaining module, configured to obtain environmental information of the adjacent lane; and
> a lane change region planning module, configured to obtain at least one first lane change region in the adjacent lane based on the environmental information and the reference lane change duration, where the at least one first lane change region includes a region in which the ego-vehicle is located in the adjacent lane after the ego-vehicle travels from the current location to the adjacent lane through lane change.

In a possible implementation, the obtaining module is further configured to: after the lane change region planning module obtains the at least one first lane change region in the adjacent lane, obtain information about at least one traffic participant adjacent to the at least one first lane change region.

A prediction module is configured to determine a probability that the at least one traffic participant occupies the at least one first lane change region.

The lane change region planning module is further configured to select at least one second lane change region from the at least one first lane change region based on the probability.

In a possible implementation, the lane change region planning module is further configured to: after selecting the at least one second lane change region from the at least one first lane change region based on the probability, adjust a size of the at least one second lane change region based on a speed or an acceleration of the at least one traffic participant, to obtain at least one updated second lane change region.

In a possible implementation, the lane change region planning module is specifically configured to: calculate, based on one or more of the speed or the acceleration of the at least one traffic participant, a speed range corresponding to the adjacent lane, the speed of the ego-vehicle, or a maximum acceleration of the ego-vehicle, a safe distance between the ego-vehicle and an adjacent vehicle after the ego-vehicle travels to each region through lane change, where the speed range corresponding to the adjacent lane is a range of a speed of a vehicle traveling in the adjacent lane, and the maximum acceleration of the ego-vehicle is a maximum value of an acceleration of the ego-vehicle; and adjust the size of the at least one second lane change region based on the safe distance, to obtain the at least one updated second lane change region.

In a possible implementation, information about any one of the at least one traffic participant includes one or more of the following: turn signal identification information, a lateral distance between the traffic participant and an adjacent lane line, information about the adjacent lane line, or a lateral speed of the traffic participant. The turn signal identification information identifies whether the traffic participant turns on a turn signal. The adjacent lane line is a lane line that is of the adjacent lane and that is close to the traffic participant. The lateral speed of the traffic participant is a speed of the traffic participant relative to the adjacent lane line.

In a possible implementation, if there are a plurality of second lane change regions, the lane change region planning module is further configured to: evaluate each second lane change region based on one or more of a size of each of the plurality of second lane change regions, a speed of a vehicle adjacent to each second lane change region, a distance between each second lane change region and the ego-vehicle, or a direction of each second lane change region relative to the ego-vehicle, to obtain an evaluation value of each second lane change region; and select one of the plurality of second lane change regions as a target lane change region based on the evaluation value of each second lane change region, and control the ego-vehicle to travel to the target lane change region.

In a possible implementation, the at least one traffic participant includes a vehicle adjacent to the at least one first lane change region.

In a possible implementation, the lane change region planning module is further configured to obtain the at least one first lane change region in the adjacent lane based on information about at least one obstacle, the reference lane change duration, and speed limit information. The speed limit information includes one or more of a maximum speed or a minimum speed of the ego-vehicle, or a maximum speed or a minimum speed corresponding to the adjacent lane.

In a possible implementation, the reference lane change duration obtaining module is specifically configured to obtain the reference lane change duration based on the speed of the ego-vehicle and a distance between the ego-vehicle and a preset location in the adjacent lane.

In a possible implementation, the preset location includes at least one of a center line of the adjacent lane or a lane line of the adjacent lane.

In a possible implementation, the reference lane change duration obtaining module is specifically configured to obtain the reference lane change duration based on the speed of the ego-vehicle, road condition information of the adjacent lane, and a distance between the ego-vehicle and the adjacent lane. The road condition information includes one or more of the following: a road slope and a road material of the adjacent lane, and a maximum speed or a minimum speed corresponding to the adjacent lane.

In a possible implementation, the apparatus further includes: a display module, configured to display the at least one second lane change region on a display interface of the ego-vehicle.

In a possible implementation, the display module is further configured to: obtain input data for the display interface; and select one of the at least one second lane change region as the target lane change region based on the input data, and control the ego-vehicle to travel from the current location to the target lane change region through lane change.

In a possible implementation, the display module is further configured to further display, on the display interface of the ego-vehicle, the information about the traffic participant, for example, information such as a location, a size, or a shape of an obstacle such as a vehicle, a pedestrian, or a warning sign.

According to a third aspect, an embodiment of this application provides a lane change region obtaining apparatus. The lane change region obtaining apparatus may also be referred to as a digital processing chip or a chip. The chip includes a processing unit and a communication interface. The processing unit obtains program instructions through the communication interface. The program instructions are executed by the processing unit. The processing unit is configured to perform a processing-related function in the first aspect or any optional implementation of the first aspect.

According to a fourth aspect, this application provides an electronic device, used in a vehicle. The electronic device includes a display screen, a memory, and one or more processors. The memory stores code of a graphical user interface of an application. The one or more processors are configured to execute the code of the graphical user interface (GUI) stored in the memory, to display the graphical user interface on the display screen. The graphical user interface includes:

displaying at least one first lane change region on the display screen, where the at least one first lane change region is a region determined based on environmental information and reference lane change duration. The reference lane change duration is duration required for a ego-vehicle to change a lane from a current location to an adjacent lane. The first lane change region is a region that is in the adjacent lane and that satisfies lane change of the ego-vehicle.

In a possible implementation, the graphical user interface further includes: displaying, on the display screen, information that is included in the environmental information of the adjacent lane and that is about a traffic participant.

In a possible implementation, the graphical user interface further includes: displaying information about at least one second lane change region on the display screen. The at least one second lane change region is selected from the at least one first lane change region based on a probability. The probability is a probability that at least one traffic participant occupies the at least one first lane change region. The at least one traffic participant is adjacent to the at least one first lane change region.

In a possible implementation, the graphical user interface further includes: displaying information about the at least one traffic participant on the display screen.

In a possible implementation, the graphical user interface further includes: in response to an operation on the at least one second lane change region and determining one of the at least one lane change region as a target lane change region, displaying the target lane change region on the display screen. The target lane change region is a region in which the ego-vehicle is located after the ego-vehicle travels from a current lane to the adjacent lane through lane change.

In a possible implementation, the display screen of the electronic device includes at least one of a touchscreen, a dashboard, or a head-up display HUD.

Optionally, the at least one processor of the electronic device may be further configured to perform the steps of the method in the first aspect or any optional implementation of the first aspect, and display a displayable interface by using the display screen, for example, a lane change region and the information about the traffic participant.

According to a fifth aspect, an embodiment of this application provides a computer-readable storage medium including instructions. When the instructions are run on a computer, the computer is enabled to perform the method in the first aspect or any optional implementation of the first aspect.

According to a sixth aspect, an embodiment of this application provides a computer program product including instructions. When the computer program product is run on a computer, the computer is enabled to perform the method in the first aspect or any optional implementation of the first aspect.

According to a seventh aspect, an embodiment of this application provides a vehicle.

The vehicle includes a processor. The processor may be configured to perform the method in the first aspect or any optional implementation of the first aspect.

## BRIEF DESCRIPTION OF DRAWINGS

FIG. 1 is a schematic diagram of a structure of a vehicle according to an embodiment of this application;
FIG. 2 is a schematic flowchart of lane change of a vehicle according to this application;
FIG. 3A is a schematic diagram of a vehicle lane change scenario according to this application;
FIG. 3B is a schematic diagram of another vehicle lane change scenario according to this application;
FIG. 4A is a schematic diagram of another vehicle lane change scenario according to this application;
FIG. 4B is a schematic diagram of another vehicle lane change scenario according to this application;
FIG. 4C is a schematic diagram of another vehicle lane change scenario according to this application;
FIG. 5 is a schematic diagram of another vehicle lane change scenario according to this application;
FIG. 6 is a schematic flowchart of a lane change region obtaining method according to this application;
FIG. 7 is a schematic diagram of a manner for calculating reference lane change duration according to this application;
FIG. 8 is a schematic diagram of an obstacle according to this application;
FIG. 9A is a schematic diagram of another obstacle according to this application;
FIG. 9B is a schematic diagram of another obstacle according to this application;
FIG. 10 is a schematic diagram of a lane change region obtaining manner according to this application;
FIG. 11 is a schematic diagram of another obstacle according to this application;
FIG. 12A is a schematic diagram of another obstacle according to this application;
FIG. 12B is a schematic diagram of another lane change region obtaining manner according to this application;
FIG. 13A is a schematic diagram of a lane change region adjustment manner according to this application;
FIG. 13B is a schematic diagram of another lane change region adjustment manner according to this application;

FIG. 14 is a schematic diagram of a lane change region selection manner according to this application;

FIG. 15A is a schematic diagram of another obstacle according to this application;

FIG. 15B is a schematic diagram of another obstacle according to this application;

FIG. 15C is a schematic diagram of another obstacle according to this application;

FIG. 16 is a schematic diagram of another obstacle according to this application;

FIG. 17 is a schematic diagram of another obstacle according to this application;

FIG. 18 is a schematic diagram of another lane change region obtaining manner according to this application;

FIG. 19A is a schematic diagram of a lane change region display manner according to this application;

FIG. 19B is a schematic diagram of another lane change region display manner according to this application;

FIG. 19C is a schematic diagram of another lane change region display manner according to this application;

FIG. 20 is a schematic diagram of another lane change region display manner according to this application;

FIG. 21A is a schematic diagram of another vehicle lane change scenario according to this application;

FIG. 21B is a schematic diagram of planning a travel path for lane change according to this application;

FIG. 21C is another schematic diagram of planning a travel path for lane change according to this application;

FIG. 22 is a schematic diagram of a structure of a lane change region obtaining apparatus according to this application;

FIG. 23 is a schematic diagram of a structure of another lane change region obtaining apparatus according to this application; and

FIG. 24 is a schematic diagram of a structure of a chip according to this application.

## DESCRIPTION OF EMBODIMENTS

The following describes the technical solutions in embodiments of this application with reference to the accompanying drawings in embodiments of this application. It is clear that the described embodiments are merely some but not all the embodiments of this application. All other embodiments obtained by a person skilled in the art based on embodiments of this application without creative efforts shall fall within the protection scope of this application.

A lane change region obtaining method provided in embodiments of this application may be applied to various path planning scenarios. For example, this application may be applied to a scenario in which a lane change region is selected for a vehicle. Alternatively, the lane change region obtaining method provided in this application may be performed by a vehicle. In addition, this application may also be applied to a scenario in which path planning is performed on various types of robots, for example, a freight robot, a detection robot, a sweeping robot, or another type of robot. The freight robot is used herein as an example to further describe an application scenario. When the freight robot performs transportation, a path needs to be planned for the freight robot. When the freight robot moves, lane change may be needed. According to the lane change region obtaining method provided in this application, an effective lane change region may be accurately and safely obtained, so that the freight robot may travel from a current location to the lane change region through lane change, to safely and smoothly complete transportation.

The following describes embodiments of this application with reference to the accompanying drawings. A person of ordinary skill in the art may learn that with development of technologies and emergence of a new scenario, the technical solutions provided in embodiments of this application are also applicable to a similar technical problem.

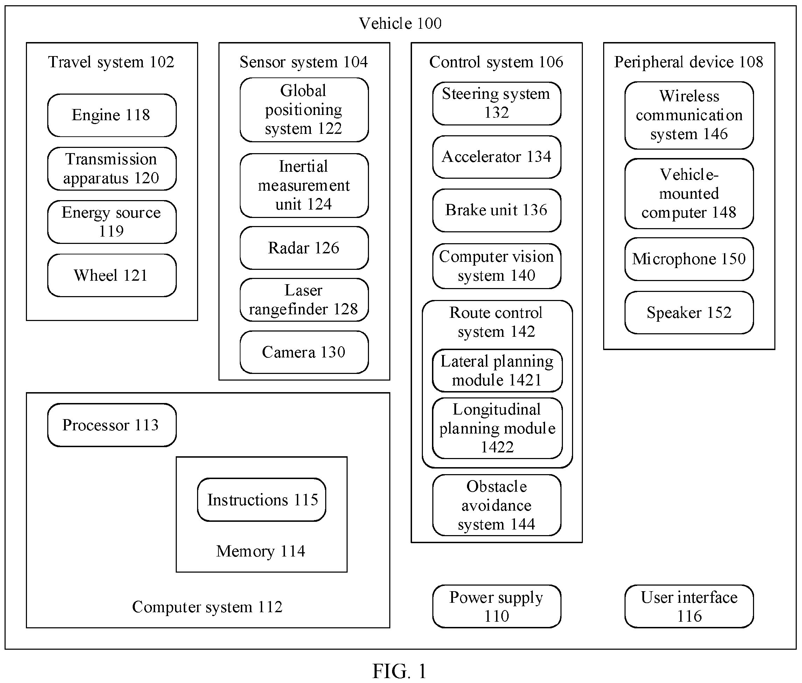

For ease of understanding the solutions, a structure of a vehicle provided in this application is first described in embodiments of this application with reference to FIG. 1. FIG. 1 is a schematic diagram of a structure of the vehicle according to an embodiment of this application. The vehicle 100 may be configured in an autonomous driving mode. For example, the vehicle 100 may control the vehicle 100 in the autonomous driving mode, determine current statuses of the vehicle and an ambient environment of the vehicle through a manual operation, determine whether there is an obstacle in the ambient environment, and control the vehicle 100 based on information about the obstacle. When the vehicle 100 is in the autonomous driving mode, the vehicle 100 may also be configured to operate without interacting with a person.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of parts. In addition, the subsystems and the parts of the vehicle 100 may be connected to each other in a wired or wireless manner.

The travel system 102 may include a component providing power to the vehicle 100 for moving. In an embodiment, the travel system 102 may include an engine 118, an energy source 119, a transmission apparatus 120, and wheels/tires 121.

The engine 118 may be an internal combustion engine, a motor, an air compression engine, or a combination of other types of engines, for example, a hybrid engine including a gasoline engine and a motor, or a hybrid engine including an internal combustion engine and an air compression engine. The engine 118 converts the energy source 119 into mechanical energy. Examples of the energy source 119 include gasoline, diesel, another petroleum-based fuel, propane, another compressed-gas-based fuel, anhydrous alcohol, a solar panel, a battery, or another power source. The energy source 119 may also provide energy to another system of the vehicle 100. The transmission apparatus 120 may transmit the mechanical energy from the engine 118 to the wheel 121. The transmission apparatus 120 may include a gearbox, a differential, and a drive shaft. In an embodiment, the transmission apparatus 120 may further include another device, for example, a clutch. The drive shaft may include one or more shafts that may be coupled to one or more wheels 121.

The sensor system 104 may include a plurality of sensors sensing information about the ambient environment of the vehicle 100. For example, the sensor system 104 may include a positioning system 122 (the positioning system may be a global positioning system GPS, a BeiDou system, or another positioning system), an inertial measurement unit (inertial measurement unit, IMU) 124, a radar 126, a laser rangefinder 128, and a camera 130. The sensor system 104 may further include sensors (for example, an in-vehicle air quality monitor, a fuel gauge, and an oil temperature gauge) in an internal system of the monitored vehicle 100. Sensing data from one or more of these sensors may be used to detect an object and corresponding features (a location, a shape, a direction, a speed, and the like) of the object. Such detection and recognition are key functions for safe operation of the autonomous vehicle 100. A sensor mentioned in the following implementations of this application may be the radar 126, the laser rangefinder 128, the camera 130, or the like.

The positioning system 122 may be configured to estimate a geographical location of the vehicle 100. The IMU 124 is configured to sense location and orientation changes of the vehicle 100 based on an inertial acceleration. In an embodiment, the IMU 124 may be a combination of an accelerometer and a gyroscope. The radar 126 may sense an object in the ambient environment of the vehicle 100 by using a radio signal, and may be specifically represented as a millimeter-wave radar or a lidar. In some embodiments, in addition to sensing the object, the radar 126 may be further configured to sense a speed and/or a moving direction of the object. The laser rangefinder 128 may sense, by using a laser, an object in an environment in which the vehicle 100 is located. In some embodiments, the laser rangefinder 128 may include one or more laser sources, a laser scanner, one or more detectors, and another system component. The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various parts, including a steering system 132, an accelerator 134, a brake unit 136, a computer vision system 140, a route control system 142, and an obstacle avoidance system 144.

The steering system 132 may operate to adjust a travel direction of the vehicle 100. For example, in an embodiment, the steering system 132 may be a steering wheel system. The accelerator 134 is configured to control an operating speed of the engine 118, and further control a speed of the vehicle 100. The brake unit 136 is configured to control the vehicle 100 to decelerate. The brake unit 136 may reduce a speed of the wheel 121 by using friction. In another embodiment, the brake unit 136 may convert kinetic energy of the wheel 121 into a current. Alternatively, the brake unit 136 may reduce a speed of the wheel 121 in another form, to control the speed of the vehicle 100. The computer vision system 140 may operate to process and analyze the image captured by the camera 130, to recognize the object and/or a feature in the ambient environment of the vehicle 100. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to draw a map for an environment, track an object, estimate a speed of the object, and the like. The route control system 142 is configured to determine a travel route and a travel speed of the vehicle 100. In some embodiments, the route control system 142 may include a lateral planning module 1421 and a longitudinal planning module 1422. The lateral planning module 1421 and the longitudinal planning module 1422 are respectively configured to determine the travel route and the travel speed of the vehicle 100 based on data from the obstacle avoidance system 144, the GPS 122, and one or more predetermined maps. The obstacle avoidance system 144 is configured to recognize, evaluate, and avoid or bypass, in another manner, an obstacle in the environment in which the vehicle 100 is located. The obstacle may be specifically represented as an actual obstacle and a virtual moving object that may collide with the vehicle 100. In an instance, the control system 106 may additionally or alternatively include a component other than those shown and described, or may not include some of the foregoing components.

The vehicle 100 interacts with an external sensor, another vehicle, another computer system, or a user by using the peripheral device 108. The peripheral device 108 may include a wireless data transmission system 146, a vehicle-mounted computer 148, a microphone 150, and/or a speaker 152. In some embodiments, the peripheral device 108 provides means for the user of the vehicle 100 to interact with the user interface 116. For example, the vehicle-mounted computer 148 may provide information to the user of the vehicle 100. The vehicle-mounted computer 148 may be further operated through the user interface 116, to receive an input from the user. The vehicle-mounted computer 148 may be operated through a touchscreen. In another case, the peripheral device 108 may provide means for the vehicle 100 to communicate with another device in the vehicle. For example, the microphone 150 may receive audio (for example, a voice command or another audio input) from the user of the vehicle 100. Likewise, the speaker 152 may output audio to the user of the vehicle 100. The wireless data transmission system 146 may wirelessly communicate with one or more devices directly or through a communication network. For example, the wireless data transmission system 146 may perform communication through a 3G cellular network such as CDMA, EVD0, or GSM/GPRS, perform communication through a 4G cellular network such as LTE, or perform communication through a 5G cellular network. The wireless data transmission system 146 may perform communication through a wireless local area network (wireless local area network, WLAN). In some embodiments, the wireless data transmission system 146 may directly communicate with a device through an infrared link, Bluetooth, or ZigBee. Other wireless protocols may be used. For example, various vehicle data transmission systems such as the wireless data transmission system 146 may include one or more dedicated short range communication (dedicated short range communication, DSRC) devices, and these devices may include public and/or private data communication between vehicles and/or roadside stations.

The power supply 110 may supply power to various components of the vehicle 100. In an embodiment, the power supply 110 may be a rechargeable lithium-ion or lead-acid battery. One or more battery packs including such batteries may be configured as the power supply to supply power to various components of the vehicle 100. In some embodiments, the power supply 110 and the energy source 119 may be implemented together, for example, in some battery electric vehicles.

Some or all of functions of the vehicle 100 are controlled by the computer system 112. The computer system 112 may include at least one processor 113. The processor 113 executes instructions 115 stored in a non-transitory computer-readable medium such as a memory 114. The computer system 112 may alternatively be a plurality of computing devices that control an individual component or subsystem of the vehicle 100 in a distributed manner. The processor 113 may be any conventional processor, such as a commercially available central processing unit (central processing unit, CPU). Optionally, the processor 113 may be a dedicated device such as an application-specific integrated circuit (application-specific integrated circuit, ASIC) or another hardware-based processor. Although FIG. 1 functionally illustrates the processor, the memory, and another part of the computer system 112 in a same block, a person of ordinary skill in the art should understand that the processor or the memory may actually include a plurality of processors or memories stored in different physical housings. For example, the memory 114 may be a hard disk drive, or another storage medium located in a housing different from a housing of the computer system 112. Therefore, a reference to the processor 113 or the memory 114 is understood as a reference to a set of processors or memories that may or may not operate concurrently. Different from using a single processor to perform steps described herein, some components such as a steering component and a deceleration component may include respective processors that perform only computation related to specific functions of the components.

In various aspects described herein, the processor 113 may be away from the vehicle 100 and wirelessly communicate with the vehicle 100. In other aspects, some of the processes described herein are performed on the processor 113 disposed inside the vehicle 100, while others are performed by a remote processor 113, including necessary steps for performing a single operation.

In some embodiments, the memory 114 may include the instructions 115 (for example, program logic). The instructions 115 may be executed by the processor 113 to perform various functions of the vehicle 100, including the functions described above. The memory 114 may further include additional instructions, including instructions for sending data to, receiving data from, interacting with, and/or controlling one or more of the travel system 102, the sensor system 104, the control system 106, and the peripheral device 108. In addition to the instructions 115, the memory 114 may further store data, such as a road map, route information, and a location, a direction, a speed, and other such vehicle data of the vehicle, and other information. Such information may be used by the vehicle 100 and the computer system 112 when the vehicle 100 operates in an autonomous mode, a semi-autonomous mode, and/or a manual mode. The user interface 116 is configured to provide information for or receive information from the user of the vehicle 100. Optionally, the user interface 116 may include one or more input/output devices in a set of the peripheral devices 108, for example, the wireless data transmission system 146, the vehicle-mounted computer 148, the microphone 150, or the speaker 152.

The computer system 112 may control a function of the vehicle 100 based on inputs received from various subsystems (for example, the travel system 102, the sensor system 104, and the control system 106) and the user interface 116. For example, the computer system 112 may communicate with another system or part in the vehicle 100 through a can bus. For example, the computer system 112 may control the steering system 132 by using an input from the control system 106, to avoid an obstacle detected by the sensor system 104 and the obstacle avoidance system 144. In some embodiments, the computer system 112 may operate to provide control over many aspects of the vehicle 100 and the subsystems of the vehicle 100.

Optionally, one or more of the foregoing components may be separated from or associated with the vehicle 100. For example, the memory 114 may be partially or entirely separated from the vehicle 100. The foregoing components may be communicatively coupled together in a wired and/or wireless manner.

Optionally, the foregoing components are merely examples. In actual application, components in the foregoing modules may be added or removed based on an actual requirement.

FIG. 1 should not be construed as a limitation on embodiments of this application. The data transmission method provided in this application may be performed by the computer system 112, the radar 126, the laser rangefinder 130, or the peripheral device such as the vehicle-mounted computer 148 or another vehicle-mounted terminal. For example, the data transmission method provided in this application may be performed by the vehicle-mounted computer 148. The vehicle-mounted computer 148 may plan a travel path and a corresponding speed curve for the vehicle, generate a control instruction based on the travel path, and send the control instruction to the computer system 112. The computer system 112 controls the steering system 132, the accelerator 134, the brake unit 136, the computer vision system 140, the route control system 142, the obstacle avoidance system 144, or the like in the control system 106 of the vehicle, to implement autonomous driving of the vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

Generally, in a conventional lane change decision-making solution, a warning region detection manner like a blind spot detection (blind spot detection, BSD) system/lane change warning (lane change warning, LCW) system. That is, four front, rear, left, and right warning regions of a ego-vehicle are observed in real time. When there is a vehicle in a region or TTC between the vehicle in the region and the ego-vehicle is excessively short, it is determined that lane change is not allowed in this direction, and a lane change function is suppressed. However, in this solution, in a scenario in which lane change is urgent but traffic congestion occurs, for example, the ego-vehicle enters and leaves a ramp, the lane change function is suppressed, and function experience is poor. Only a current location of another vehicle and time to collision (time to collision, TTC) are considered, and a motion trend of the vehicle is not considered. As a result, a vehicle that is changing a lane to an adjacent lane may not be recognized, or a vehicle that is about to leave an adjacent lane may be incorrectly recognized.

In some other scenarios, a forcible lane change policy may be performed based on connected vehicle cooperation. When the ego-vehicle needs to change a lane, another vehicle is notified through vehicle cooperation, and the another vehicle decelerates to provide a lane change region, to complete lane change. However, lane change based on this manner requires communication with the another vehicle. If communication is interrupted or the vehicle rejects communication, lane change may fail.

In some other scenarios, lane change region selection is used instead of a lane change region detection manner like BSD/LCW. A lane change region is selected based on values of current distances between a ego-vehicle and a front vehicle and between the ego-vehicle and a rear vehicle, and current relative speeds between the front vehicle and the ego-vehicle and between the rear vehicle and the ego-vehicle, to perform lane change. However, in this solution, only a distance between target vehicles at a current moment is considered, and behaviors of the target vehicles are not predicted. As a result, a collision risk is high, and a lane change failure probability is high. When a plurality of lane change regions are selected, only a loss of longitudinal synchronization performed by the ego-vehicle is considered. An extremely small quantity of factors are considered, so that an optimal lane change region may not be obtained.

Generally, selection of a lane change region is closely related to a motion status of a vehicle around the region in a future period of time. Because a road condition is complex and changeable, it is usually very difficult to select the lane change region. For example, prediction of a future location of a vehicle is usually effective only in a short time range (2 to 4s). However, a lane change process usually requires about 6s. Therefore, accuracy of vehicle location prediction within duration required for lane change needs to be improved based on vehicle location prediction, which may be understood as making a predicted location of the vehicle effective as long as possible. In this way, the lane change region is more effective, and a lane change success rate of the vehicle is improved.

Therefore, this application provides a lane change region obtaining method. A location of a vehicle in a lane is predicted based on time required for lane change of the vehicle, to accurately plan an available lane change region. In this way, a success rate of a lane change function is improved to a maximum extent while lane change safety is ensured.

The following describes, in detail with reference to the vehicle shown in FIG. 1, the lane change region obtaining method provided in this application.

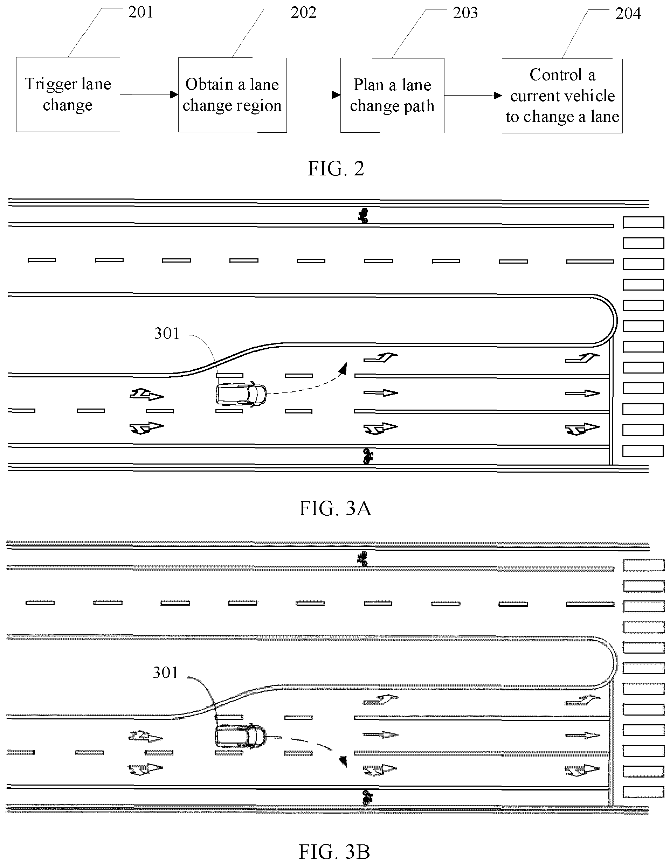

First, the method provided in this application may be applied to a vehicle lane change scenario. A vehicle lane change process may be shown in FIG. 2.

A specific process may include triggering lane change 201, obtaining a lane change region 202, planning a lane change path 203, controlling a ego-vehicle to change a lane 204, and the like.

In a scenario in which lane change is required, lane change may be triggered by the ego-vehicle, or may be triggered by a user on an interaction interface based on a requirement.

After obtaining that the ego-vehicle needs to change a lane, the lane change region may be planned based on current road condition information. The lane change region is a predicted region that is in an adjacent lane and in which the ego-vehicle is located after lane change. For example, when the ego-vehicle runs in the lane, if lane change is required, after lane change is triggered, the adjacent lane is searched for a region that is a vacant region capable of accommodating the ego-vehicle.

After the lane change region is obtained, the lane change path for the ego-vehicle to change the lane from a current location to the lane change region may be planned. The ego-vehicle is controlled to travel to the lane change region based on the lane change path, to complete lane change of the ego-vehicle.

It should be noted that in the following implementations of this application, for ease of distinguishing, vehicles mentioned in this application are classified into a ego-vehicle and another vehicle (or directly referred to as a vehicle). The ego-vehicle is a vehicle that needs to change a lane. The another vehicle is a vehicle other than the ego-vehicle on a road.

First, the method provided in this application may be applied to a vehicle lane change scenario.

Scenario 1: lane change for turning

For example, when the ego-vehicle travels on the road, if the ego-vehicle needs to turn, the ego-vehicle needs to travel in advance to a lane in which the ego-vehicle can turn. The vehicle lane change scenario may be shown in FIG. 3A. If a ego-vehicle 301 travels in a middle lane, and needs to turn left at a next intersection, the ego-vehicle needs to change the lane to a leftmost lane in advance. In this case, a lane change region in the leftmost lane may be determined in advance. Alternatively, as shown in FIG. 3B, when the ego-vehicle needs to turn right, if the ego-vehicle travels in a middle lane, the ego-vehicle needs to change the lane to a rightmost lane in advance. A lane change region in the rightmost lane may be planned based on a traveling vehicle or an obstacle in the rightmost lane. Then, a travel path for travel to the lane change region through lane change is planned. The ego-vehicle is controlled to change the lane.

Scenario 2: lane change for obstacle avoidance, lane narrowing, or the like

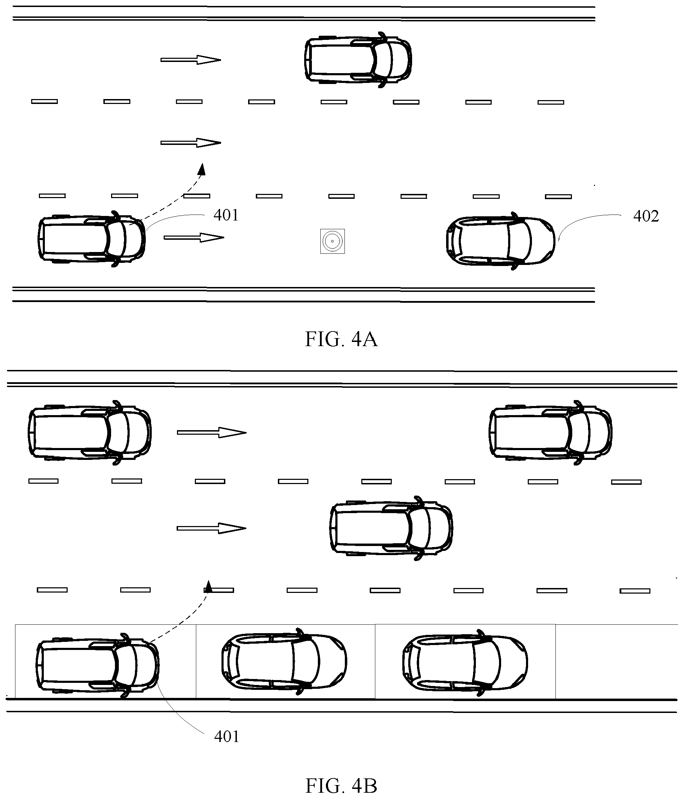

For example, when the ego-vehicle travels in a lane, if a vehicle in front of the ego-vehicle decelerates, an obstacle appears in front of the ego-vehicle, or the like, the ego-vehicle needs to change the lane, to avoid the obstacle or the vehicle that decelerates. As shown in FIG. 4A, when a ego-vehicle 401 travels in a right lane, an obstacle (for example, a faulty vehicle 402 shown in FIG. 4A) that blocks the ego-vehicle from traveling appears in front of the ego-vehicle 401. In this case, the ego-vehicle needs to change the lane to a left lane.

For another example, when the ego-vehicle stops in a roadside temporary parking space and starts again, as shown in FIG. 4B, the ego-vehicle 401 stops in the roadside parking space. When the ego-vehicle needs to move out of the parking space, the ego-vehicle needs to change a lane to an adjacent lane, to move out of the parking space.

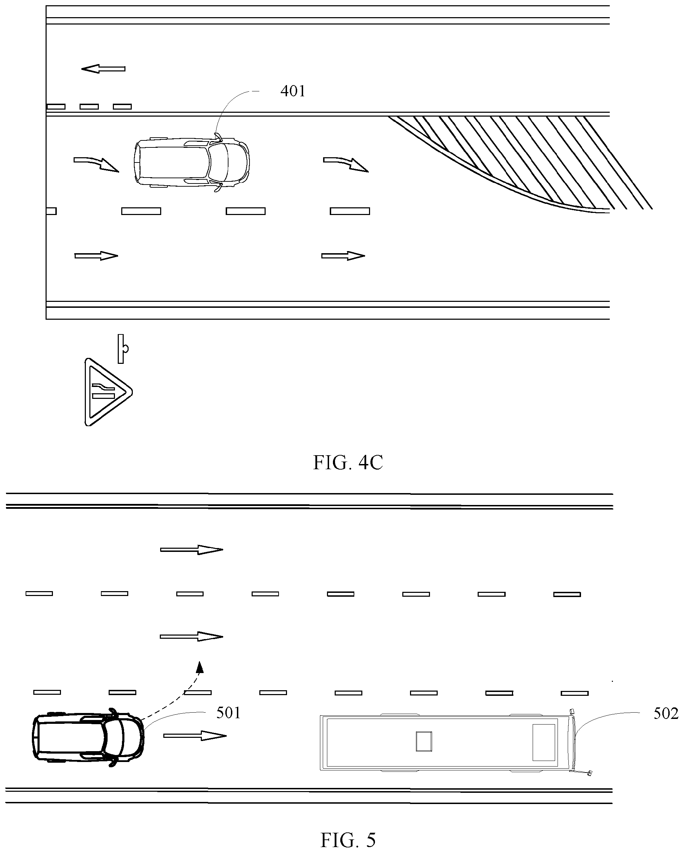

For another example, when a lane in which the ego-vehicle travels narrows, as shown in FIG. 4C, the ego-vehicle needs to change the lane to an adjacent lane, so that the ego-vehicle may travel normally.

Scenario 3: lane change for overtaking

For example, after determining an end point and expected arrival time, a user may plan a travel path for the ego-vehicle to travel from a current location to the end point. As shown in FIG. 5, when a ego-vehicle 501 travels in a current lane, if a vehicle (for example, a bus 502 shown in FIG. 5) in front of the ego-vehicle 501 travels slowly, and a user expects to arrive at an end point as early as possible, the ego-vehicle may be planned to change the lane to a lane in which a vehicle travels at a high speed. Therefore, a vehicle speed of the ego-vehicle is improved, and user experience is improved.

Therefore, this application provides a lane change region obtaining method. First, reference lane change duration for lane change of a ego-vehicle to an adjacent lane is first calculated. Then, a location of an obstacle in the adjacent lane after the reference lane change duration is predicted based on information such as a location, a speed, or a moving direction of the obstacle in the adjacent lane. Then, an available lane change region in the adjacent lane is planned based on the predicted location.

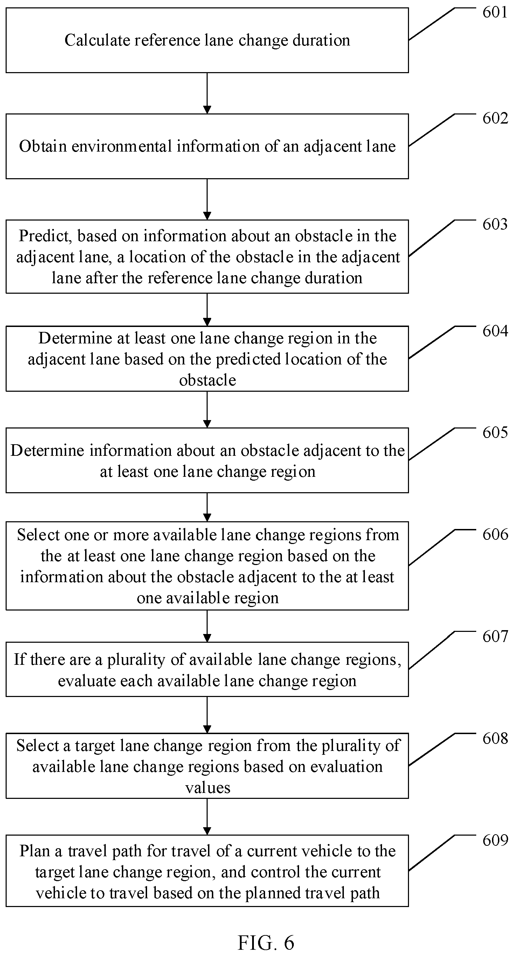

With reference to the foregoing scenario, FIG. 6 is a schematic flowchart of the lane change region obtaining method according to this application. The method is described as follows.

601: Calculate reference lane change duration.

The reference lane change duration is duration required for a ego-vehicle to travel from a current location to an adjacent lane.

Optionally, the reference lane change duration may be specifically calculated based on a speed of the ego-vehicle and a distance between the ego-vehicle and the adjacent lane.

Specifically, a lateral speed of the ego-vehicle is calculated based on the speed of the ego-vehicle, and then the reference lane change duration is calculated based on the lateral speed and a lateral distance. The lateral speed is a speed of the ego-vehicle relative to a lane line of a lane. The lateral distance is a distance between the vehicle and a lane line of the adjacent lane or a center line of the adjacent lane.

In addition, it should be understood that there may be one or more lanes adjacent to the ego-vehicle. For ease of understanding, an example in which there is one adjacent lane is used for description in this application.

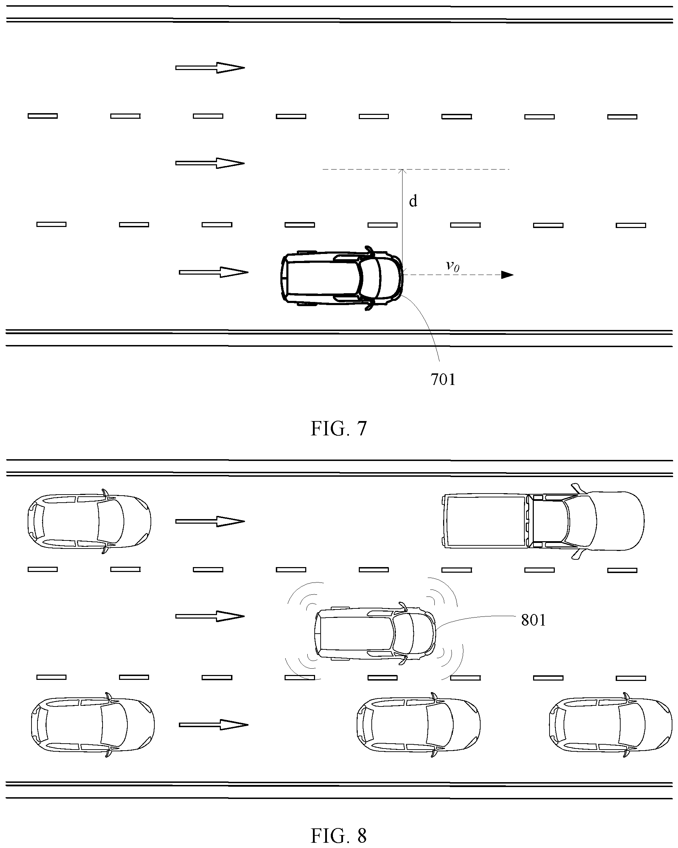

For example, as shown in FIG. 7, when a ego-vehicle 701 travels in a current lane, time required for the vehicle to change a lane from the current lane to a left lane may be calculated based on a lateral speed $v_0$ of the ego-vehicle and a distance d between the ego-vehicle and the adjacent lane, for example, is represented as $t=d/v_0$.

Optionally, the reference lane change duration may alternatively be calculated based on environmental information. For example, the reference lane change duration may be compensated based on road condition information of the adjacent lane, a temperature, humidity, a fog degree, and the like, to obtain more accurate reference lane change duration. The road condition information may include but is not limited to one or more of the following: a road slope of the adjacent lane, a road material, a maximum speed, a minimum speed, or a crosswind formed on a road.

Therefore, the environmental information is fully considered when the reference lane change duration is calculated. In this way, the calculated reference lane change duration is more accurate and better matches an environment, and a subsequently selected lane change region is more accurate. Therefore, travel safety of the ego-vehicle and riding experience of a user may be improved.

More specifically, the reference lane change duration may be calculated in two parts. One part is global duration calculated based on the road condition information or the like, and the other part is local duration calculated based on the lateral speed of the vehicle. Then, the two parts are fused to obtain the finally calculated duration required for lane change of the ego-vehicle.

For example, the global reference lane change duration calculated based on the road condition information may be represented as:

$$\mathrm{T}(\mu, v_x) = \frac{\mu(8+0.5v_x)+5}{10\mu}.$$

$\mu$ indicates a friction factor, and is affected by the road slope, the road material, the maximum speed, the minimum speed, or the crosswind formed on the road. $v_x$ indicates the speed of the vehicle. $0.5v_x$ indicates the lateral speed of the vehicle. 0.5 may be replaced with another value, and is related to a yaw angle of the vehicle.

The local reference lane change duration may be represented as: $t=d/v_0$, that is, reference lane change duration ($t$) calculated based on the lateral speed ($v_0$) of the ego-vehicle and the distance ($d$) between the ego-vehicle and the adjacent lane.

Then, weighted fusion is performed on the global reference lane change duration and the local reference lane change duration to obtain the duration required for lane change of the ego-vehicle, for example, represented as:

$$\mathrm{T} = \omega * T_{\mathrm{local}} + (1-\omega) * T_{\mathrm{global}}$$

$T_{local}$ indicates the local reference lane change duration. $T_{global}$ indicates the global reference lane change duration. $\omega$ indicates a weight of the local reference lane change duration.

Therefore, in this implementation of this application, weighted fusion may be performed on the reference lane change duration calculated based on the lateral speed of the ego-vehicle and the reference lane change duration calculated based on the road condition information, to obtain more accurate reference lane change duration. Therefore, the lane change region is subsequently planned more accurately.

More specifically, a manner for calculating the lateral speed of the ego-vehicle or an obstacle (that is, a static or dynamic traffic participant) may be represented as:

$$v_{line} = \frac{D_y}{D_t} = \frac{D_y}{D_x} * \frac{D_x}{D_t} = \left(C_1 + C_2 * d_x + \frac{1}{2} * C_3 * d_x^2\right) * v_x$$

$D_y$ indicates a distance of lateral movement relative to a lane line in a period of time. $D_x$ indicates an actual movement distance of the vehicle in a period of time. $C_1$, $C_2$, and $C_3$ are constants. Therefore, in this implementation of this application, more accurate reference lane change duration may be calculated based on the environmental information and the lateral speed of the ego-vehicle.

602: Obtain environmental information of the adjacent lane.

The environmental information may include information about a dynamic or static traffic participant in the adjacent lane, for example, a moving or stationary vehicle, a warning sign, a triangular cone, or a pedestrian in the adjacent lane.

Specifically, the environmental information may include information such as a location, a speed, an acceleration, or a moving direction of an object such as a traveling vehicle, a pedestrian, or a roadblock in the adjacent lane.

It should be noted that an obstacle mentioned in the following embodiments of this application is a dynamic or static traffic participant, such as a moving or stationary vehicle, a warning sign, a triangular cone, or a pedestrian, which is collectively referred to as an obstacle below for ease of understanding.

Specifically, information about an obstacle may be collected in a plurality of manners. For example, information such as a location, a speed, an acceleration, or a moving direction of the obstacle in a lane may be collected by a sensor disposed in the ego-vehicle, for example, a lidar, a millimeter-wave radar, an infrared sensor, a camera, or a dynamic vision sensor (dynamic vision sensor, DVS). Alternatively, the ego-vehicle may communicate with a vehicle near the ego-vehicle by using a communication module, for example, through an infrared link, Bluetooth, ZigBee, or another communication mode, to obtain information such as an ID, a location, a speed, an acceleration, or a moving direction of another vehicle.

For example, as shown in FIG. 8, when a ego-vehicle 801 travels in a current lane, a nearby obstacle, for example, a location, a moving speed, an acceleration, or a moving direction of an obstacle such as a vehicle, a street lamp, a road sign, or an animal, may be collected by a sensor such as a radar, a camera, an infrared sensor, or a DVS disposed in the ego-vehicle.

Optionally, the information collected by the sensor may be filtered, to improve accuracy of the information about the detected obstacle. A specific filtering manner may include but is not limited to low-pass filtering, a Luenberger observer, and Kalman filtering.

For example, Kalman filtering is used as an example. The filtering manner may be represented as:

$$x_{k|k-1} = F_{k-1} * x_{k-1} + G_{k-1} * u_{k-1}$$

$$P_{k|k-1} = F_{k-1} * P_{k-1} * F_{k-1}^T + Q_{k-1}$$

$$K_k = P_{k|k-1} * H_k^T * \left(H_k * P_{k|k-1} H_k^T + R_k\right)^{-1}$$

$$x_k = x_{k|k-1} + K_k * \left(y_k - H_k * x_{k|k-1}\right)$$

$$P_k = (I - K_k * H_k) * P_{k|k-1}$$

$x_k$ indicates a status variable, such as the location, the speed, the acceleration, or other information. *F* indicates a transfer function, that is, a time transfer function from a previous location to a next location. *G* indicates a relationship between a control variable and the status variable. *u* indicates the control variable, such as a yaw rate of the ego-vehicle. *P* indicates a covariance matrix of the status variable. *Q* indicates process noise. *R* indicates measurement noise of the sensor. *Q* and *R* indicate parameters for parameter adjustment. *K* indicates a Kalman gain. *H* indicates a relationship between a measured variable ($y_k$) and a predicted variable ($x_k$), for example, is set to 1.

In addition, in addition to Kalman filtering, data collected by the sensor may be filtered in another filtering manner, for example, filtered by using the Luenberger observer, which may be represented as:

$$\dot{x} = A * x + B * u$$

$$y = C * x$$

$$\dot{\tilde{x}} = A * \tilde{x} + B * u + L * (y - C * \tilde{x})$$

x indicates a status variable, such as the location, the speed, the acceleration, or other information. *A* indicates a transfer function, that is, a time transfer function from a previous location to a next location. *B* indicates a relationship between a control variable and the status variable. *u* indicates the control variable, such as a yaw rate of the ego-vehicle. C indicates a relationship between a measured variable (*y*) and a predicted variable (*x*), for example, is set to 1. *L* is a gain.

Therefore, in this implementation of this application, the data collected by the sensor may be filtered in a plurality of manners. In this way, the information about the obstacle collected by the sensor is more accurate. Therefore, an obstacle that affects lane change of the ego-vehicle is more accurately determined, and effectiveness and safety of a subsequently planned lane change region are improved.

It should be noted that an execution order of step 602 and step 603 is not limited in this application. Step 602 may be performed first. Alternatively, step 603 may be performed first. Alternatively, step 602 and step 603 may be performed at the same time. This may be specifically adjusted based on an actual application scenario.

603 : Predict, based on the information about the obstacle in the adjacent lane, a location of the obstacle in the adjacent lane after the reference lane change duration.

After the information about the obstacle in the adjacent lane is obtained, subsequent available lane change region detection after the reference lane change duration may be predicted based on the obtained information about the obstacle in the adjacent lane.

For example, as shown in FIG. 6, the location of the obstacle in the adjacent lane after the reference lane change duration may be predicted based on the obtained information about the obstacle in the adjacent lane, so that an available lane change region may be subsequently predicted accurately.

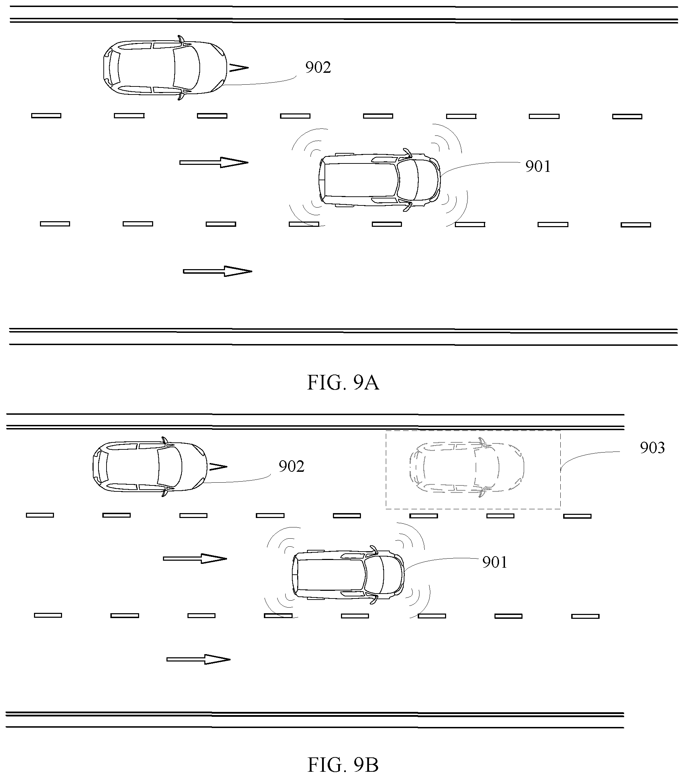

For example, as shown in FIG. 9A, there is a vehicle 902 in an adjacent lane of a ego-vehicle 901. Information such as a current location, a vehicle speed, and an acceleration of the vehicle 902 may be obtained by using a sensor of the ego-vehicle. A location of the vehicle 902 after the reference lane change duration, for example, a region 903 in FIG. 9B, is predicted based on the obtained information such as the current location, the vehicle speed, and the acceleration of the vehicle 902.

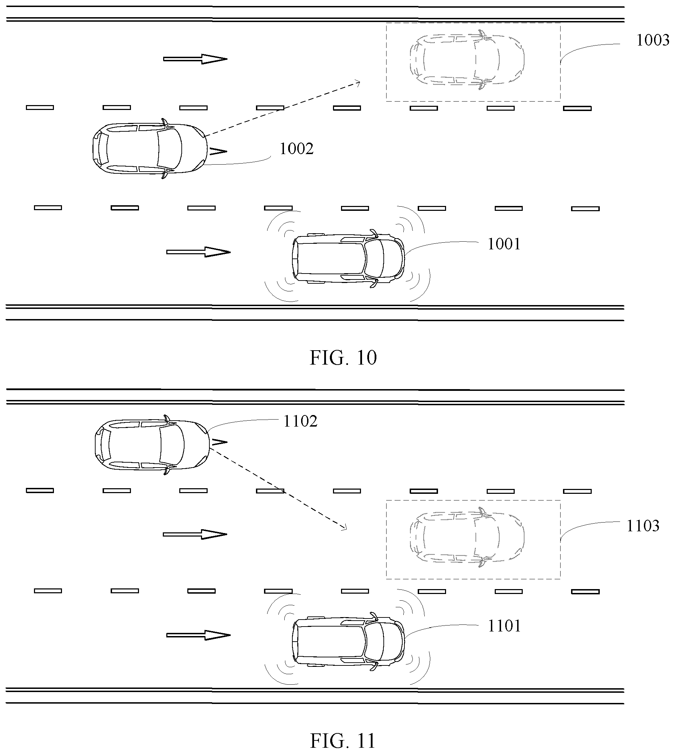

In addition, in some scenarios, the obtained information about the obstacle may further include the moving direction of the obstacle, and moving directions of some obstacles indicate traveling away from the adjacent lane. In this case, a predicted location of the obstacle may be in a lane that is one lane away from the ego-vehicle. As shown in FIG. 10, a ego-vehicle 1001 may predict, based on information such as a speed, a moving direction, or an acceleration of a vehicle 1002 collected by a sensor, that a region in which the vehicle 1002 is located after the reference lane change duration is a region 1003 shown in FIG. 10, and the vehicle 1002 has deviated from a lane in which the vehicle 1002 is currently located. Therefore, a range that is in the lane and that can accommodate a vehicle due to lane change of the vehicle 1002 may also be a region that may be considered when the lane change region is determined below.

In some other scenarios, in addition to the information about the obstacle in the adjacent lane, an obstacle in a lane that is one lane away from the ego-vehicle may be further detected, to predict, based on information about the obstacle, whether a location of the obstacle after the reference lane change duration is in the adjacent lane. As shown in FIG. 11, when a vehicle 1102 travels in a lane that is one lane away from a ego-vehicle 1101, information such as a speed, a moving direction, or an acceleration of the vehicle 1102 may also be collected. A region in which the vehicle 1102 is located after the reference lane change duration is predicted to be a region 1103 in FIG. 11. The region 1103 is in a lane adjacent to the ego-vehicle 1101.

604: Obtain at least one lane change region in the adjacent lane.

After the reference lane change duration required for lane change and the information about the obstacle in the adjacent lane are obtained, the at least one lane change region in the adjacent lane may be planned based on the reference lane change duration and the information about the obstacle in the adjacent lane. The lane change region is a region that is in the adjacent lane and that satisfies lane change of the ego-vehicle, that is, a region in which the ego-vehicle is located in the adjacent lane after the ego-vehicle travels from the current location to the adjacent lane through lane change.

Specifically, after the predicted location of the obstacle is obtained based on the reference lane change duration, a region (referred to as a vacant region for ease of understanding) in which there is no obstacle in the adjacent lane may be determined, and one or more lane change regions (or referred to as first lane change regions) are determined from the region in which there is no obstacle. The lane change region mentioned in this application includes a region occupied by the ego-vehicle in the adjacent lane after the ego-vehicle travels from the current lane to the adjacent lane through lane change. Generally, the lane change region may be a region occupied by the ego-vehicle in the adjacent lane after the ego-vehicle travels from the current lane to the adjacent lane through lane change. Therefore, lane change safety of the ego-vehicle is improved.

More specifically, when the lane change region is obtained through division from the vacant region (that is, a region that is not occupied after the reference lane change duration), a size of the region may be considered. For example, a distance between two adjacent obstacles in the lane is greater than a first threshold, and the first threshold exceeds a length of the vehicle, or is greater than a sum of a length of the vehicle and a preset safe distance. Therefore, a selected lane change region can accommodate the ego-vehicle, and is an available lane change region.

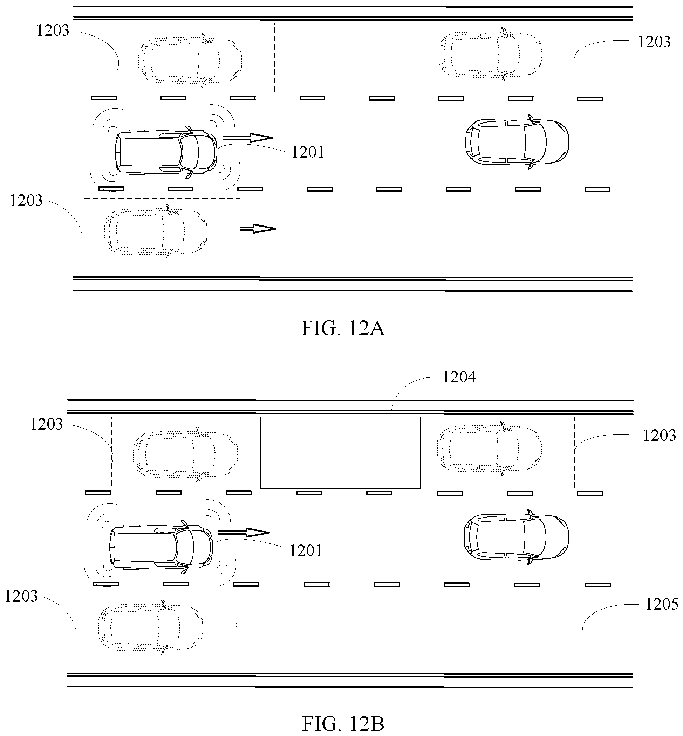

For example, as shown in FIG. 12A, after a location of an obstacle around a ego-vehicle 1201 in an adjacent lane of the ego-vehicle is obtained, a region larger than a specific range may be obtained through division from the adjacent lane of the ego-vehicle, to obtain at least one lane change region, for example, a lane change region 1204 and a lane change region 1205 shown in FIG. 12B.

Therefore, in this implementation of this application, a location of the obstacle in the lane after the reference lane change duration may be predicted based on the reference lane change duration and the information such as the location, the moving direction, the speed, or the acceleration of the obstacle, to obtain, through division, the available lane change region from the vacant region in the lane. In this way, the ego-vehicle may change the lane based on a more effective lane change region. Therefore, a lane change success rate of the ego-vehicle and travel safety are improved.

It should be noted that in the following implementations of this application, a travel direction of the ego-vehicle or a direction that a front end of the ego-vehicle faces is referred to as front, and a direction opposite to the front is referred to as rear. The front of the ego-vehicle or the front of the lane change region, mentioned below, is a direction that is the same as the travel direction of the vehicle or the direction that the front end of the ego-vehicle faces. The rear of the ego-vehicle or the rear of the lane change region, mentioned below, is a direction opposite to the travel direction of the ego-vehicle or a direction opposite to the direction that the front end of the ego-vehicle faces. Details are not described below.

In some scenarios, when the at least one lane change region in the adjacent lane is determined, an environment or a speed limit of the ego-vehicle, for example, one or more of a maximum speed and a minimum speed of the ego-vehicle, a maximum speed limit of the lane, a minimum speed limit of the lane, a maximum speed or a minimum speed under an environment limitation (for example, in a scenario of traffic jam, slow traffic, or traffic control), or other speed limit information, further needs to be considered, to avoid traveling at an excessively high or excessively low speed when the ego-vehicle travels to the lane change region, to improve the travel safety of the ego-vehicle. It may be understood that a speed limit range is formed by the maximum speed and the minimum speed of the ego-vehicle, the maximum speed limit and the minimum speed limit of the lane, the maximum speed or the minimum speed under the environment limitation, or the like, and the speed of the vehicle during lane change needs to be within the speed limit range. Therefore, a proper region is determined as a lane change region based on the speed limit range. In this way, the vehicle speed of the ego-vehicle during lane change is within a safe range. Therefore, the travel safety of the ego-vehicle is improved.

For example, when the lane change region is obtained, an initial region may be first determined. A distance between the initial region and the ego-vehicle is calculated. Then, a vehicle speed required when the vehicle travels to the initial region is calculated. If the vehicle speed is not within the speed limit range, the initial region is deleted; or if the vehicle speed is within the speed limit range, the initial region is used as the lane change region. In this way, the vehicle speed of the ego-vehicle during lane change is within the safe range. Therefore, the travel safety of the ego-vehicle is improved.

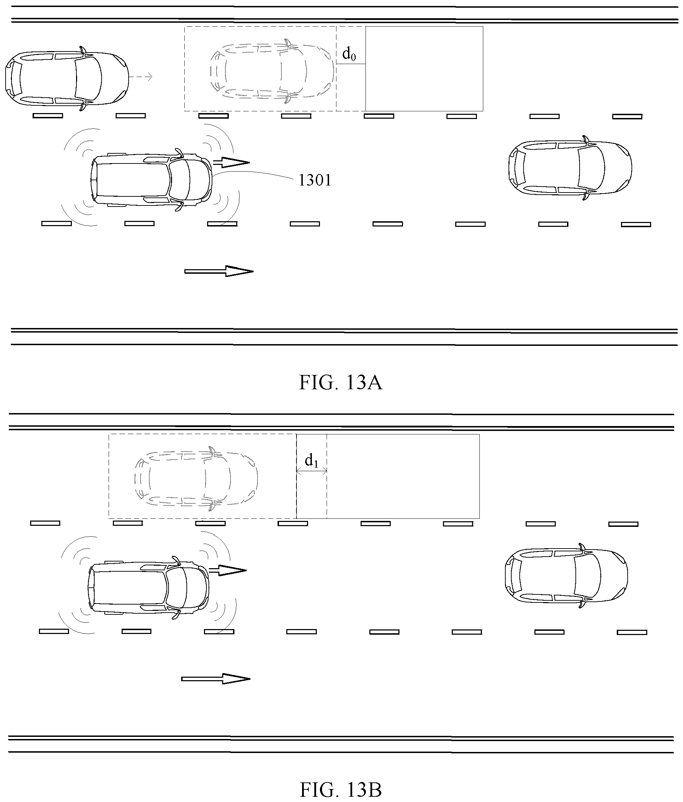

In a possible implementation, after the lane change region is obtained, a size of the lane change region may be further adjusted, to subsequently plan a travel path of the ego-vehicle more accurately. Specifically, the size of the lane change region may be adjusted based on the speed or the acceleration of the obstacle in the adjacent lane, to obtain an updated lane change region. For example, if an acceleration of a vehicle behind the lane change region increases, a speed of the vehicle may increase, and a predicted location of the vehicle is closer to the lane change region, so that the lane change region becomes smaller. As shown in FIG. 13A, a length of the lane change region is reduced by $d_0$, to obtain an updated lane change region. If an acceleration of a vehicle behind the lane change region decreases, a speed of the vehicle may decrease, so that the lane change region becomes larger. As shown in FIG. 13B, a length of the lane change region is reduced by di, to obtain a wider lane change region. It should be understood that when the lane change region is excessively small, for example, the length of the lane change region is less than a preset length, or an area of the lane change region is less than a preset area, the lane change region may not accommodate the ego-vehicle, that is, the ego-vehicle cannot change the lane through the lane change region. In this case, the lane change region may be deleted, and the region is not used as a lane change region. Therefore, in this implementation of this application, the size of the lane change region may be further adjusted based on the speed or the acceleration of the obstacle in the adjacent lane. In this way, the lane change region is more effective, and the lane change success rate of the ego-vehicle is improved.

In some scenarios, a travel direction of a vehicle may be further obtained to determine whether the vehicle travels away from the adjacent lane, or it may be further determined, based on a travel direction of a vehicle adjacent to the adjacent lane, whether the vehicle is about to enter the adjacent lane, to adjust the size of the lane change region. In this scenario, duration for the obstacle to leave or enter a lane may be compared with the reference lane change duration, to determine whether the obstacle vehicle is about to enter/leave the lane in a lane change process of the ego-vehicle, to adjust a size of the available lane change region. For example, duration required for a vehicle in the adjacent lane to travel away from the adjacent lane may be calculated based on a vehicle speed and a yaw angle of the vehicle that is near the ego-vehicle and that is in the adjacent lane, and a lateral distance between the vehicle and a lane to which the vehicle is to change the lane. Then, the duration is compared with the duration required for the vehicle to change the lane to the adjacent lane. If the duration required for lane change of the vehicle is less than the duration required for the vehicle in the adjacent lane to travel away from the adjacent lane, it indicates that a region in front of the vehicle may be used as a lane change region or a part of a lane change region.

In addition, after the at least one lane change region is obtained through division based on the predicted location, if there is only one lane change region, the lane change region may be used as a lane change region of the ego-vehicle, a path for lane change of the ego-vehicle to the lane change region is planned, and the ego-vehicle is controlled to travel to the lane change region.

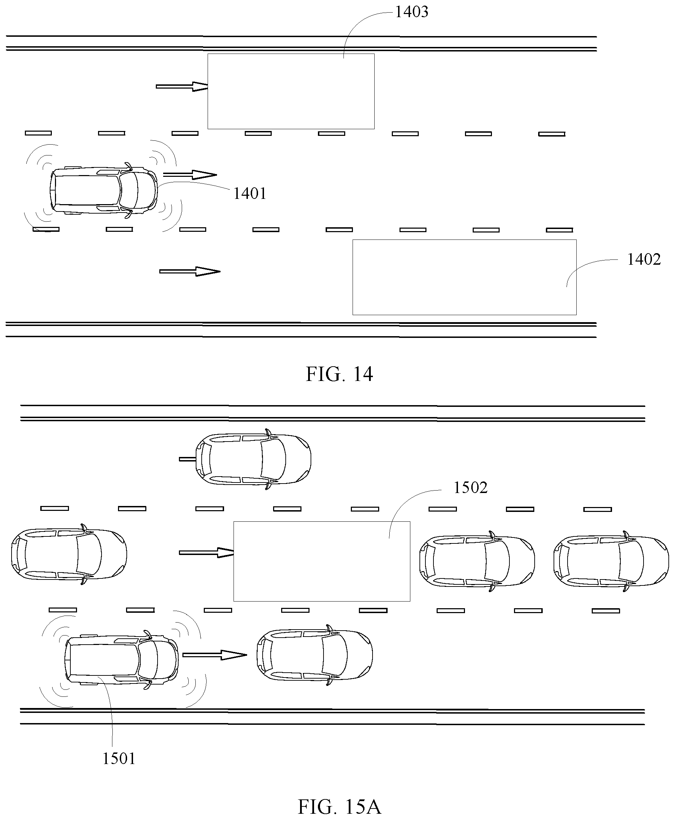

If there are a plurality of lane change regions, an optimal region may be selected from the plurality of lane change regions as the lane change region of the ego-vehicle, a path for lane change of the ego-vehicle to the lane change region is planned, and the ego-vehicle is controlled to travel to the lane change region. The optimal lane change region may be an optimal region with a largest range or closest to the ego-vehicle. For example, as shown in FIG. 14, when there are a plurality of lane change regions in a lane adjacent to a ego-vehicle 1401, a region with a largest range, for example, a region 1402, or a region closest to the ego-vehicle, for example, a region 1403, may be selected as a lane change region of the ego-vehicle. In this way, the lane change success rate of the ego-vehicle is improved.

In addition, in some scenarios, if only one lane change region is planned, information about an adjacent obstacle may be detected in real time in a process of controlling lane change of the ego-vehicle. In this way, an obstacle occupying the lane change region is detected in time, and the travel path of the ego-vehicle is adjusted in time based on the obstacle occupying the lane change region. Therefore, the travel safety of the ego-vehicle is improved.

In addition, if there are a plurality of lane change regions, a more reliable lane change region may be further selected from the at least one lane change region. In this way, the lane change success rate of the vehicle and the travel safety are further improved. In other words, optionally, the following steps 605 to 609 may be further performed. The following describes the optional steps 605 to 609 in detail.

605: Obtain information about an obstacle adjacent to the at least one lane change region.

After one or more lane change regions are obtained, information about an obstacle (or referred to as a traffic participant for ease of distinguishing) adjacent to the one or more lane change regions, for example, information about a location, a speed, an acceleration, or a moving direction of the obstacle, may be further determined.

The obstacle in step 605 may include the obstacle mentioned in step 602, or may be a part of the obstacle mentioned in step 602, which may be specifically determined based on an actual application scenario.

It may be understood that, to facilitate further accurate estimation of effectiveness of the lane change region, a future motion region of a related vehicle around the lane change region may be predicted, and impact of an obstacle that affects the effectiveness of the lane change region is estimated, to select a more appropriate lane change region corresponding to a higher lane change success rate. The following describes some obstacles that affect the size of the lane change region by using examples.

For example, as shown in FIG. 15A, after a lane change region 1502 is obtained, information such as a location, a speed, an acceleration, or a travel direction of a vehicle that is near the lane change region and that may affect a size of the lane change region within a sensing range is detected by using a sensor of a ego-vehicle 1501.

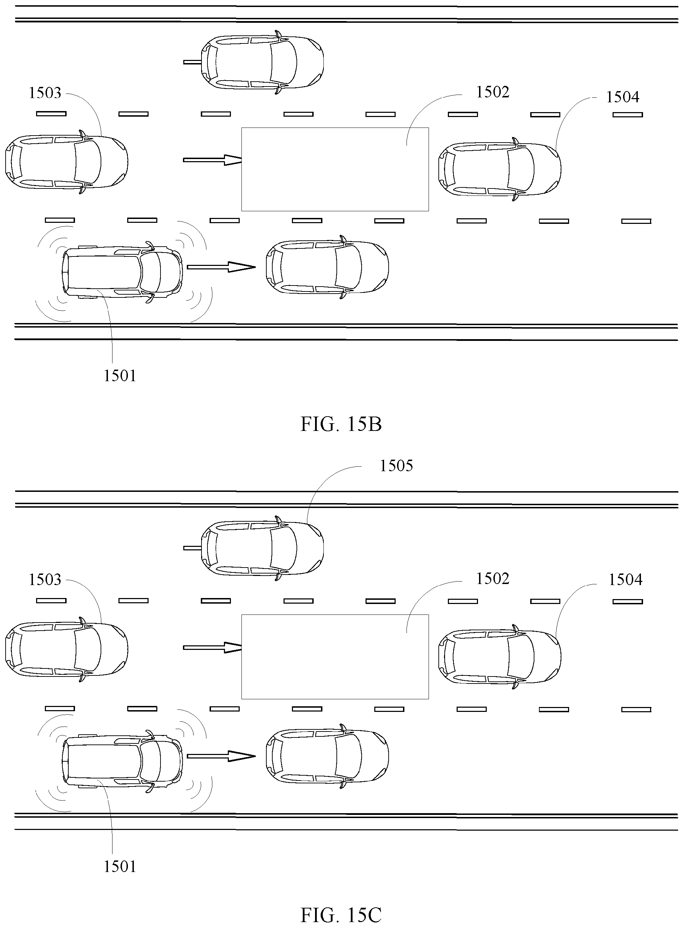

Specifically, as shown in FIG. 15B, for example, for a vehicle 1503 or a vehicle 1504, when the vehicle 1502 or the vehicle 1503 accelerates or decelerates, the lane change region may become larger or smaller, and the size of the lane change region is affected. Alternatively, the vehicle 1502 or the vehicle 1503 may also travel to a lane near the vehicle 1502 or the vehicle 1503, which may enlarge the size of the lane change region. Therefore, information such as a location, a speed, an acceleration, or a moving direction of the vehicle 1502 or the vehicle 1503 needs to be detected.

As shown in FIG. 15C, a vehicle 1505 on the left of the lane change region 1502 may occupy the lane change region 1502 because the vehicle 1505 changes a lane to an adjacent lane. Therefore, information such as a location, a speed, an acceleration, or a moving direction of the vehicle 1505 also needs to be detected, to determine whether the size of the lane change region needs to be adjusted.

Specifically, a manner for acquiring the information about the obstacle in this step may be similar to that in step 602, and details are not described herein again. In addition, the information about the obstacle mentioned in this step may be included in the information about the obstacle collected in step 602, or may be information recollected by the sensor of the ego-vehicle.

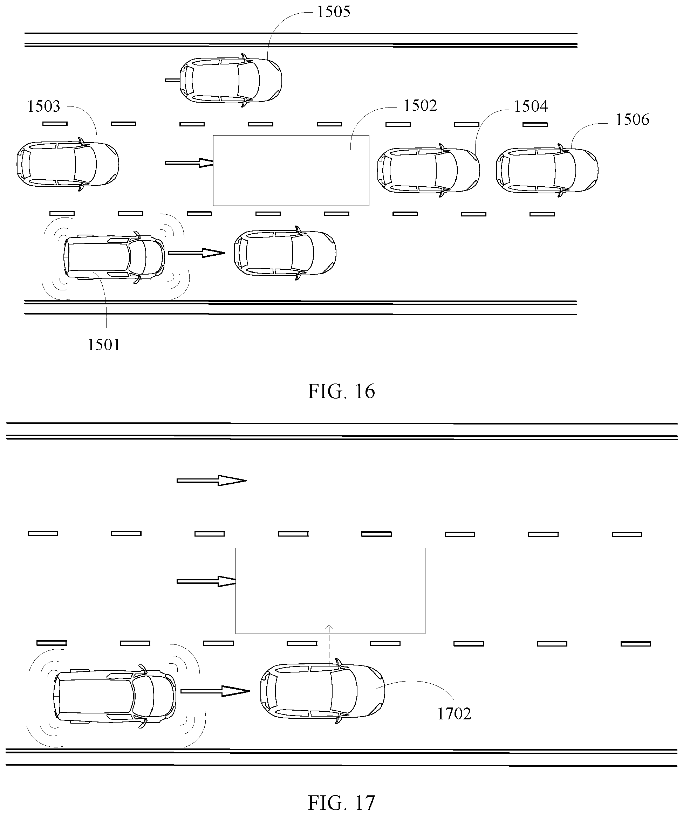

In addition, in addition to the information about the obstacle adj acent to the lane change region, information about an obstacle adjacent to the obstacle may be further obtained. For example, as shown in FIG. 16, the vehicle 1504 is adjacent to the lane change region 1502, and the vehicle 1504 is adjacent to a vehicle 1506. Both the vehicle 1504 and the vehicle 1506 may cause a change in the lane change region. For example, the vehicle 1506 may decelerate, causing deceleration of the vehicle 1504 and further changing the size of the lane change region. Therefore, information such as a speed, an acceleration, or a driving direction of the vehicle 1506 may be further detected, to determine whether to adjust the size of the lane change region 1502.

606: If there are a plurality of lane change regions, select one or more available lane change regions from the plurality of lane change regions.

Specifically, the one or more available lane change regions (or referred to as second lane change regions) may be selected from the plurality of lane change regions based on the information that is obtained in step 605 and that is about the obstacle adjacent to the at least one lane change region.

In an optional implementation, a probability that an obstacle adjacent to the lane change region occupies the lane change region may be calculated, and then a lane change region whose occupancy probability is less than a preset probability is selected based on a probability that each lane change region is occupied, to obtain the one or more available lane change regions. Specifically, when the probability that the obstacle occupies the lane change region is calculated, the probability that the obstacle occupies the lane change region may be calculated based on one or more of a lateral distance between the obstacle and a lane line, information about the lane line, a lateral speed of the obstacle, or the like.

For example, the obstacle may be a vehicle adjacent to the lane change region, for example, a vehicle 1702 in FIG. 17, and may change a lane to a left lane of the lane. Turn signal identification information identifies whether a turn signal of the vehicle is turned on. Alternatively, if a turn signal is turned on, turn signal identification information may include a turning direction indicated by the turned-on turn signal. An adjacent lane line may be a lane line of the adjacent lane, for example, a lane line close to the ego-vehicle or a lane line close to the obstacle. The information about the lane line may include that the lane line that is of the adjacent lane and that is close to the vehicle is a dashed line or a solid line. When the lane line is a solid line, lane change is not allowed; or when the lane line is a dotted line, lane change is allowed. The lateral speed is the speed of the vehicle relative to the lane line. For example, a calculation manner for the probability may be represented as:

$$\text{Probability} = W_1 * LatSpeed + W_2 * Distance + W_3 * Light + W_4 * Line$$

*LatSpeed* indicates the lateral speed. $W_1$ indicates a weight value corresponding to the lateral speed. *Distance* indicates the lateral distance. $W_2$ indicates a weight value corresponding to the lateral distance. *Light* indicates a probability value that a turn signal of the detected obstacle is turned on to indicate lane change to an adjacent lane. $W_3$ indicates a weight value corresponding to the turn signal. *Line* indicates a probability that a lane line between the obstacle and the adjacent lane is a solid line or a dashed line. $W_4$ indicates a weight value corresponding to the lane line.

After the probability value is calculated, the lane change region whose occupancy probability is less than the preset probability value may be used as an available lane change region, so that the path for lane change of the ego-vehicle may be subsequently planned based on the available lane change region, to complete lane change of the ego-vehicle.

In another optional implementation, after the available lane change region is obtained, the size of the available lane change region may be further adjusted. Specifically, the size of the available lane change region may be adjusted based on information such as a speed or an acceleration of an obstacle adjacent to the available lane change region. For example, the obstacle may be a vehicle. A region occupied by the vehicle due to a sudden speed change or a sudden acceleration change may be calculated based on the speed or the acceleration of the obstacle adjacent to the available lane change region, to adjust the size of the available lane change region. For example, if a speed or an acceleration of the vehicle suddenly decreases, the size of the available lane change region may be enlarged; or if a speed or an acceleration of the vehicle increases, the size of the available lane change region may be reduced. In this way, the available lane change region is more effective, and the lane change success rate of the ego-vehicle is improved.

Further, a safe distance after the ego-vehicle travels to each available lane change region may be predicted based on one or more of the speed and the acceleration of the obstacle adjacent to the available lane change region, a speed range corresponding to the adjacent lane, the speed of the ego-vehicle, a maximum acceleration of the ego-vehicle, or the like. Then, the size of the available lane change region is adjusted based on the safe distance, to obtain an updated available lane change region. The speed range corresponding to the adjacent lane is a range of an allowed travel speed of a vehicle traveling in the adjacent lane. The maximum acceleration of the ego-vehicle is a maximum value of an acceleration of the ego-vehicle.

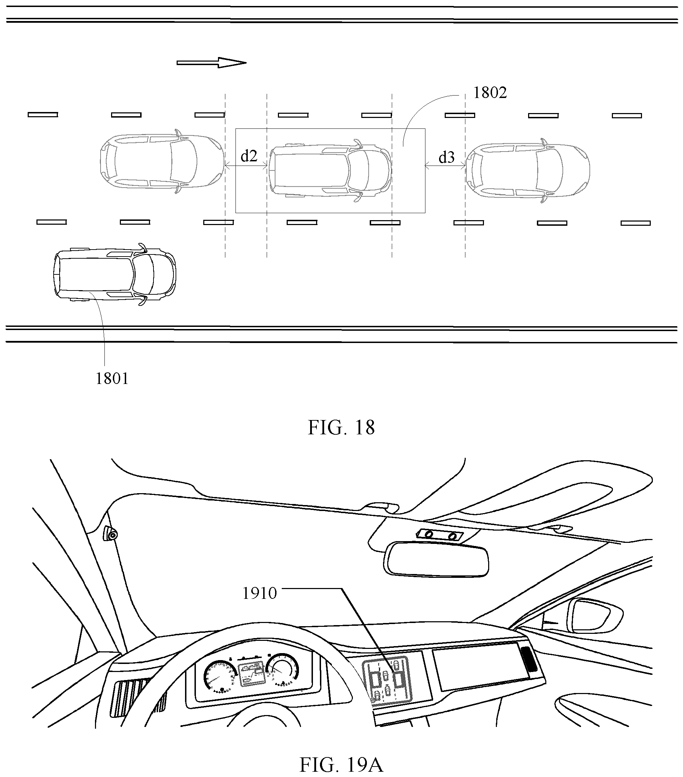

For example, for a vehicle close to a boundary of a lane change region, impact of an ambient environment on the lane change region needs to be comprehensively considered. Generally, another vehicle keeps a safe distance from a vehicle around. When a trajectory of a vehicle intersects that of a vehicle around the vehicle, the vehicle reserves an appropriate safe car-following headway based on a location, a speed, and an acceleration of the vehicle around the vehicle. This means that the boundary of the lane change region may be finally is reduced or enlarged based on the safe car-following headway. For a scenario of calculating the safe distance, refer to FIG. 18. A distance (for example, d3 shown in FIG. 18) between a ego-vehicle and a front vehicle or a distance (for example, d2 shown in FIG. 18) between the ego-vehicle and a rear vehicle when the ego-vehicle 1801 travels to an available lane change region 1802 may be predicted, for example, represented as: $$S_{safe} = S_0 + max\left[T * v(t)_i + \frac{v(t)_i * \Delta v(t)_i}{2 * \sqrt{a_{max} * b_{max}}}, 0\right]$$ . $T$ indicates the

headway. $v(t)_i$ indicates a distance between a front/rear adjacent vehicle and the ego-vehicle. $\Delta v(t)_i$ indicates a speed difference between the front vehicle and the rear vehicle. $a_{max}$ indicates a maximum acceleration of the rear vehicle. $b_{max}$ indicates a maximum deceleration of the front vehicle. Generally, when the safe distance is excessively short, and the safe distance cannot be increased through adjustment, it indicates that a safety degree is low when the ego-vehicle changes the lane to the lane change region, and when the speed of the nearby vehicle suddenly changes, collision is likely to occur. It indicates that the lane change region is not highly available, and may not be used as an available lane change region. When both the safe distance between the ego-vehicle and the front vehicle and the safe distance between the ego-vehicle and the rear vehicle are long (for example, greater than a preset distance value), it indicates that a safety degree is high when the ego-vehicle changes the lane to the lane change region, and the lane change region is highly available, and may be used as an available lane change region. Therefore, when the ego-vehicle is predicted to travel to the lane change region, if the safe distance between the ego-vehicle and the rear vehicle is excessively short, and the safe distance between the ego-vehicle and the front vehicle is excessively long, the lane change region may be moved forward, or a range of the lane change region may be enlarged forward, increase the safe distance between the ego-vehicle and the rear vehicle. If the safe distance between the ego-vehicle and the front vehicle is excessively short, and the safe distance between the ego-vehicle and the rear vehicle is long, the lane change region may be moved backward, or a size of the lane change region may be enlarged backward, to increase the safe distance between the ego-vehicle and the front vehicle.

In addition, if there is one available lane change region, the available lane change region may be used as a final lane change region, a travel path for lane change of the ego-vehicle to the lane change region is generated, and the ego-vehicle is controlled to travel based on the travel path.

If there are a plurality of available lane change regions, one of the plurality of available lane change regions may be selected as a final lane change region. A specific selection manner may be randomly selecting one available lane change region, or may be selecting one of the available lane change regions as the final lane change region based on a specific rule. Optionally, the available lane change region may be selected based on the following steps 607 and 608, that is, steps 607 and 608 are optional steps.

607: If there are a plurality of available lane change regions, evaluate each available lane change region.

A specific manner for evaluating the available lane change region may include evaluating each available lane change region based on one or more of a size of each available lane change region, a speed of a vehicle adjacent to each available lane change region, a distance between each available lane change region and the ego-vehicle, a direction of each available lane change region relative to the ego-vehicle, or the like, to obtain a score value of each available lane change region.

It may be understood that travel of the ego-vehicle to each available lane change region through lane change may be evaluated from a plurality of aspects such as safety and comfort based on information such as the size of each available lane change region, the distance between each available lane change region and the ego-vehicle, the direction of each available lane change region relative to the ego-vehicle, or the speed of the adjacent vehicle, to obtain a quantized evaluation value.

For example, the available lane change region may be scored. Factors such as a longitudinal distance between a lane change space and the ego-vehicle, the size of the available lane change region, a difference between a travel speed and a set cruising vehicle speed, whether the lane change space is in front of or behind the ego-vehicle (indicating whether acceleration or deceleration is required to implement lane change), whether to change the lane to the left or to the right, and whether a lane change direction is a navigation-allowed direction are comprehensively considered. For example, scoring may be represented as: Goal = $W_1$ * *Distance* + $W_2$ * *Length* + $W_3$ * *ΔSpeed* + $W_4$ * *DirectionLong* + $W_5$ * *DirectionLat* + $W_6$ * *Map*.

*Distance* indicates the distance between the available lane change region and the ego-vehicle. *Length* indicates a length of the available lane change region. *ΔSpeed* indicates the difference between the travel speed and the set cruising vehicle speed. *DirectionLong* indicates the longitudinal distance. *DirectionLat* indicates the direction of the available lane change region relative to the ego-vehicle. *Map* indicates whether the direction of the available lane change region relative to the ego-vehicle is a navigation-allowed direction. $W_1$, $W_2$, $W_3$, $W_4$, $W_5$, and $W_6$ indicate weight values. A weight of each factor may be adjusted based on a trigger condition for lane change. For example, in a scenario in which a driver triggers lane change, weights corresponding to the longitudinal distance and the direction may be set to be high. In a scenario in which the ego-vehicle overtakes to trigger lane change, a weight corresponding to the speed is set to be high.

Therefore, in this implementation of this application, a behavior such as deceleration and acceleration that may be performed by a key vehicle may be further predicted based on environmental information around a vehicle adjacent to the lane change region, to improve accuracy of lane change region prediction. Finally, an appropriate evaluation method is found to score a predicted lane change region, to find an optimal lane change region.

608: Select a target lane change region from the plurality of available lane change regions based on the evaluation values.

After the evaluation value of each available lane change region is obtained, an evaluation value greater than a preset evaluation value may be selected from a plurality of evaluation values, and an available lane change region corresponding to the evaluation value is used as the target lane change region.

Specifically, a region with a maximum evaluation value may be selected from the plurality of available lane change regions as the target lane change region. Certainly, a suboptimal region or another good region may be selected as the target lane change region. Specifically, this may be adjusted based on an actual application scenario.

Optionally, in some scenarios, the lane change region for lane change of the ego-vehicle or only the target lane change region may be displayed on a display interface, so that the user may observe the travel path of the ego-vehicle in real time. Therefore, user experience is improved.

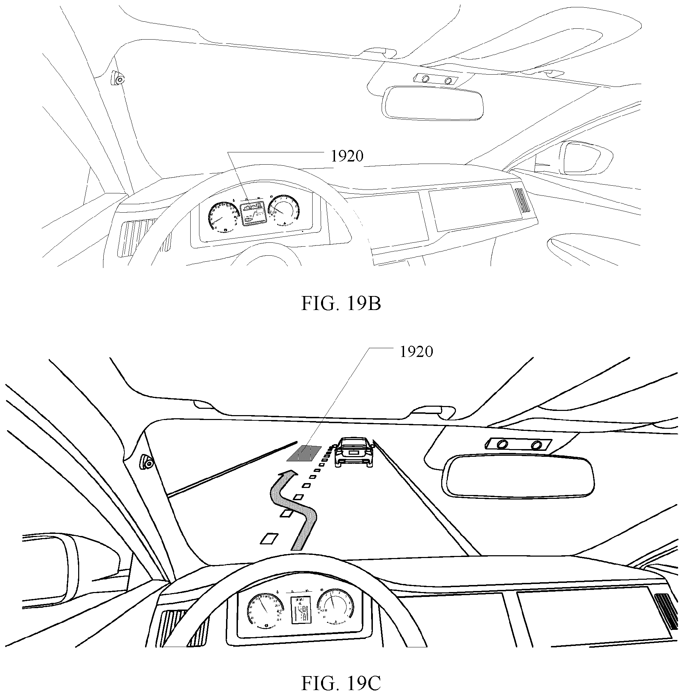

For example, the available lane change region may be displayed on a central control interface, a dashboard, or a head-up display (head up display, HUD) in the ego-vehicle. As shown in FIG. 19A, the available lane change region may be displayed on a central control interface 1910. Alternatively, as shown in FIG. 19B, the available lane change region may be displayed in the dashboard. Alternatively, as shown in FIG. 19C, an available lane change region 1920 may be displayed in an HUD manner, that is, displayed through projection in a front windshield of the ego-vehicle.

It may be understood that the planned lane change region may be displayed through HMI (human-machine interface) interaction (for example, through the HUD or central control display). This may not only improve human-machine interaction experience of the driver, but also may effectively notify the driver of a region to which the lane is to be changed, to enable the driver to obtain more information. Therefore, safety in the lane change process is improved.

Optionally, in some scenarios, the plurality of available lane change regions for lane change of the ego-vehicle may be displayed on a display interface, so that the user may select one of the regions as the target lane change region. In this way, the user may select an appropriate lane change region based on an actual application scenario, or select an appropriate lane change region based on user experience. Therefore, user experience is improved.

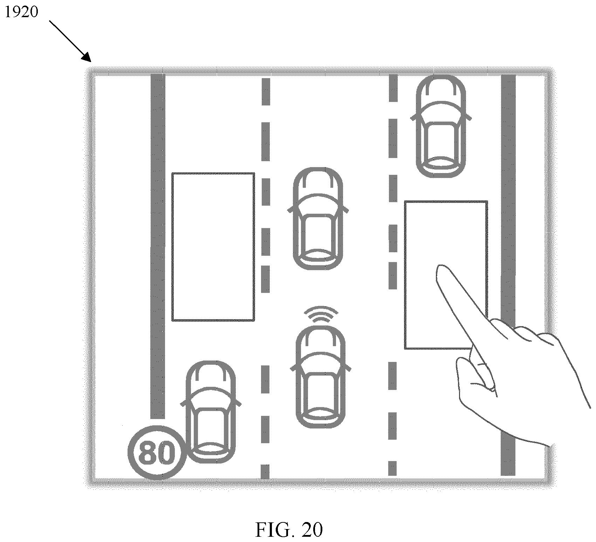

For example, as shown in FIG. 20, in a travel process of the ego-vehicle, after the plurality of available lane change regions are displayed on the display interface, the user may select one of the available lane change regions as the target lane change region, and perform subsequent travel path planning.

Optionally, the information about the obstacle, for example, a location of the obstacle relative to the ego-vehicle, and a shape or a size of the obstacle, may be further displayed on the display interface, so that driving experience of the user may be improved based on content displayed on the display interface or the information about the obstacle.

609: Plan a travel path for travel of the ego-vehicle to the target lane change region, and control the ego-vehicle to travel based on the planned travel path.

After the target lane change region is determined, it is equivalent to determining an end point of the travel path. Then, a curve for travel of the ego-vehicle from the current location to the target lane change region is fitted. A turning angle of the ego-vehicle is determined based on the curve. The turning angle of the ego-vehicle is controlled, so that the ego-vehicle travels to the target lane change region based on the planned curve. After the ego-vehicle travels to the target lane change region, the speed of the ego-vehicle may be adjusted, so that the speed of the ego-vehicle falls within a speed limit range corresponding to the lane.

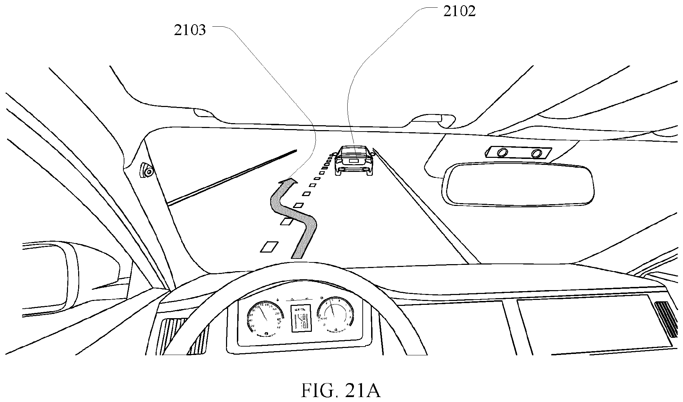

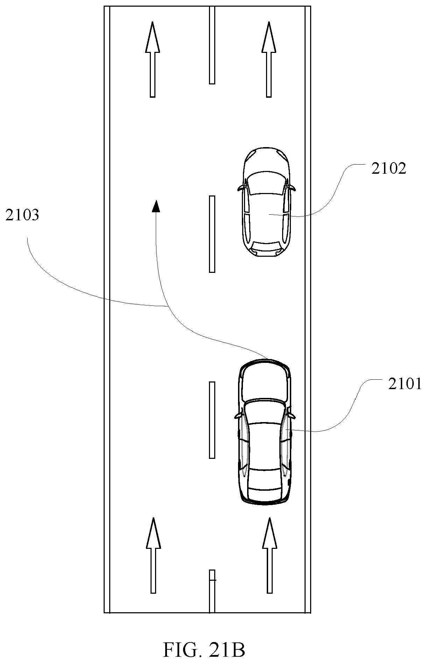

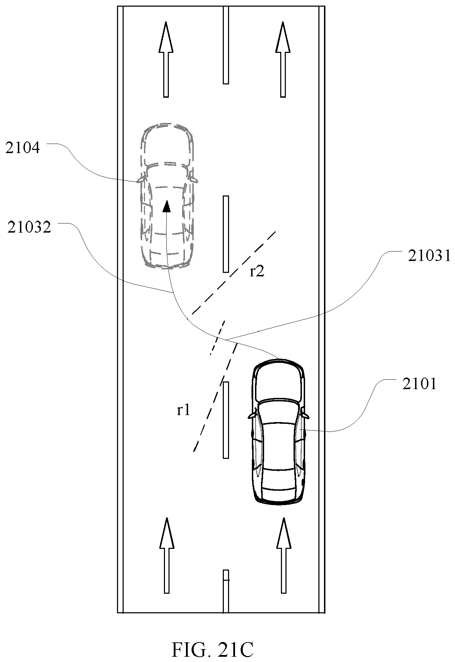

For example, in an autonomous driving scenario, as shown in FIG. 21A, in the travel process of the ego-vehicle, it is detected that there is a vehicle 2102 in front of the ego-vehicle, a distance between the vehicle 2102 and the ego-vehicle is 126m, and a travel speed is 60 Km/h. In this case, for example, if the user requires fast arrival, the user may select lane change. Then, a travel path 2103 for lane change is generated based on a ego-vehicle speed of the ego-vehicle, the vehicle speed of the vehicle 2102, and a road condition. The ego-vehicle is controlled to travel based on the travel path 2103. For ease of understanding, a top view of the corresponding travel path may be shown in FIG. 21B. After it is detected that there is the vehicle 2102 in front of the ego-vehicle, that is, in a travel direction of the ego-vehicle, and the target lane change region of the ego-vehicle is determined, the travel path 2103 is generated, and the ego-vehicle is controlled to travel based on the travel path. A manner for generating the travel path may include a speed-time graph (speed-time graph, ST) algorithm, a 3DST (3d speed-time graph, SLT) algorithm, and the like. The travel path of the ego-vehicle is planned in a plurality of manners. The following uses one of the planning manners as an example for description. As shown in FIG. 21C, a location 2104 of the ego-vehicle after lane change, that is, a location in the target lane change region, is selected. Two curves 21031 and 21032 for travel of the ego-vehicle to a location 21011 are planned. The curves 21031 and 21032 are tangent. A turning radius of the ego-vehicle, that is, a radius r1 of the curve 21031 and a radius r2 of the curve 21032, is calculated based on the ego-vehicle speed of the ego-vehicle. Then, smoothing processing is performed on the curve 21031 and the curve 21032 to obtain the travel path 2103. The turning angle of the ego-vehicle is determined based on the turning radius. The turning angle of the ego-vehicle is controlled, so that the ego-vehicle travels along the travel path 2103.

Therefore, in this implementation of this application, the reference lane change duration may be first calculated, then the location of the vehicle traveling in the lane after the reference lane change duration is predicted, and the lane change region in the adjacent lane of the ego-vehicle is accurately planned based on the predicted location, to obtain a more effective lane change region, so that the lane change success rate of the ego-vehicle is improved. In addition, a case in which the lane change region is occupied may be further predicted, to further obtain a more effective available lane change region, so that the lane change success rate of the ego-vehicle is further improved. In addition, after the plurality of available lane change regions are selected, the optimal available lane change region may be selected based on the information such as the size of the available lane change region, the speed of the vehicle around, or the direction relative to the ego-vehicle, so that the lane change process of the ego-vehicle is safer, the success rate is higher, and user experience is best.

In addition, optionally, after the final lane change region of the ego-vehicle is determined, related information about lane change of the ego-vehicle may be sent to another vehicle in the environment by using a wired or wireless communication network. For example, the ego-vehicle may broadcast information such as the location of the lane change region, a lane change moment, or the vehicle speed, so that the vehicle around may pay attention to a travel change of the ego-vehicle, and the vehicle around may avoid the ego-vehicle in time and adjust a route of the vehicle. Therefore, the travel safety of the vehicle around the ego-vehicle is improved.

In addition, in the travel process of the ego-vehicle and the vehicle around, information such as the speeds or the locations of the ego-vehicle and the vehicle around may change in real time. Information about the ego-vehicle and information about the vehicle around may be collected in real time, to update the lane change region in real time until the ego-vehicle successfully completes lane change, or gives up lane change.

The foregoing describes in detail the vehicle and a process of the lane change region obtaining method provided in this application. The following describes in detail a graphical user interface (graphical user interface, GUI) provided in this application with reference to the vehicle and the lane change region obtaining method. For ease of understanding, the following describes, by using an example with reference to some display interfaces, the GUI provided in this application.

First, this application provides a GUI. The GUI is stored in an electronic device.

Second, this application further provides an electronic device. The electronic device includes a display screen, a memory, and one or more processors. The one or more processors are configured to execute one or more computer programs stored in the memory. The display screen is configured to display a graphical user interface stored in the memory.

The following describes the graphical user interface in this application. The graphical user interface includes: displaying at least one first lane change region on the display screen, where the at least one first lane change region is determined based on environmental information and reference lane change duration. The reference lane change duration is duration required for a ego-vehicle to travel from a current location to an adjacent lane through lane change.

In a possible implementation, the graphical user interface further includes: displaying, on the display screen, information about at least one traffic participant in the adjacent lane.

In a possible implementation, the graphical user interface further includes: displaying information about at least one second lane change region on the display screen. The at least one second lane change region is selected from the at least one first lane change region based on a probability. The probability is a probability that the at least one traffic participant occupies the at least one first lane change region. The at least one traffic participant is adjacent to the at least one first lane change region.

For example, for a manner for displaying the first lane change region or the second lane change region, refer to FIG. 20. To be specific, an available lane change region, a selected available lane change region, or the like may be displayed on the display screen.

In a possible implementation, the graphical user interface further includes: displaying the information about the at least one traffic participant on the display screen.

In a possible implementation, the graphical user interface further includes: in response to an operation on the at least one second lane change region and determining one of the at least one lane change region as a target lane change region, displaying the target lane change region on the display screen. The target lane change region is a region in which the ego-vehicle is located after the ego-vehicle travels from a current lane to the adjacent lane through lane change.

In a possible implementation, the display screen of the electronic device includes at least one of a touchscreen, a dashboard, or a head-up display HUD. For example, as shown in FIG. 19A to FIG. 19C, the available lane change region may be displayed on a central control interface, the dashboard, or the HUD.

Optionally, the at least one processor of the electronic device may be further configured to perform the steps of the method in FIG. 2 to FIG. 21C, and display a displayable interface by using the display screen, to display information such as a lane change region and a static or dynamic traffic participant, so that a user may more intuitively learn of a travel status of the ego-vehicle through the display screen. Therefore, user experience is improved.

The foregoing describes in detail the process of the lane change region obtaining method provided in this application. The following describes a lane change region obtaining apparatus provided in this application. The lane change region obtaining apparatus is configured to perform the process of the method corresponding to FIG. 2 to FIG. 21C.

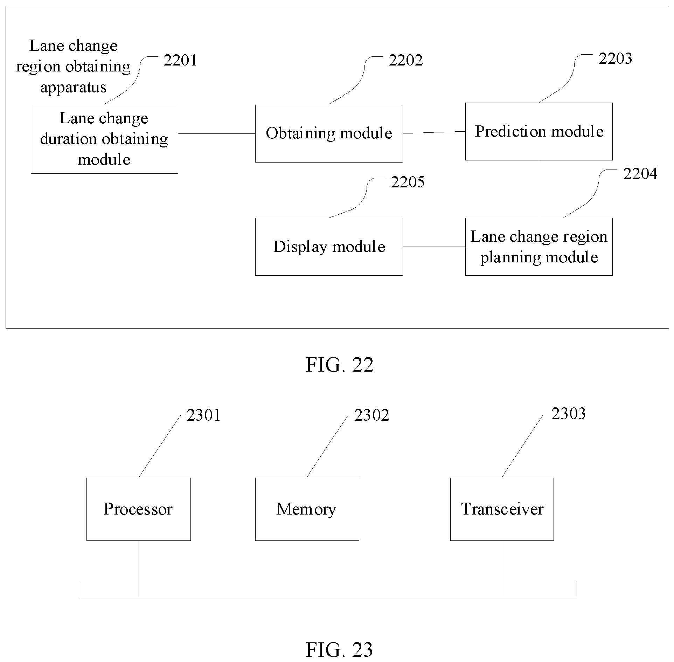

FIG. 22 is a schematic diagram of a structure of the lane change region obtaining apparatus according to this application. The lane change region obtaining apparatus may include:

a reference lane change duration obtaining module 2201, configured to obtain reference lane change duration based on a speed of a ego-vehicle and a distance between the ego-vehicle and an adjacent lane, where the reference lane change duration is duration required for the ego-vehicle to travel from a current location to the adjacent lane through lane change;

an obtaining module 2202, configured to obtain environmental information of the adjacent lane; and

a lane change region planning module 2204, configured to determine at least one first lane change region in the adjacent lane based on the environmental information and the reference lane change duration, where the first lane change region includes a region in which the ego-vehicle is located in the adjacent lane after the ego-vehicle travels from the current location to the adjacent lane.

In a possible implementation, the lane change region obtaining apparatus may further include: a prediction module 2203, configured to obtain a predicted location of at least first traffic participant in the adjacent lane based on the environmental information and the reference lane change duration.

The lane change region planning module 2204 is specifically configured to determine the at least one first lane change region in the adjacent lane based on the predicted location.

In a possible implementation, the obtaining module is further configured to: after the lane change region planning module obtains the at least one first lane change region in the adjacent lane, obtain information about at least one traffic participant adjacent to the first lane change region.

The prediction module 2203 is further configured to determine a probability that the at least one traffic participant occupies the first lane change region.

The lane change region planning module 2204 is further configured to select at least one second lane change region from the at least one first lane change region based on the probability.

In a possible implementation, the lane change region planning module 2204 is further configured to: after selecting the at least one second lane change region from the first lane change region based on the probability, adjust a size of the at least one second lane change region based on a speed or an acceleration of the at least one traffic participant, to obtain at least one updated second lane change region.

In a possible implementation, the lane change region planning module 2204 is specifically configured to: calculate, based on one or more of the speed or the acceleration of the at least one traffic participant, a speed range corresponding to the adjacent lane, a speed of the ego-vehicle, or a maximum acceleration of the ego-vehicle, a safe distance between the ego-vehicle and an adjacent vehicle after the ego-vehicle travels to each region through lane change; and adjust the size of the at least one second lane change region based on the safe distance, to obtain the at least one updated second lane change region. The speed range corresponding to the adjacent lane is a range of an allowed travel speed of a vehicle traveling in the adjacent lane. The maximum acceleration of the ego-vehicle is a maximum value of an acceleration of the ego-vehicle.

In a possible implementation, information about any one of the at least one traffic participant includes one or more of the following: turn signal identification information, a lateral distance between the traffic participant and an adjacent lane line, information about the adjacent lane line, or a lateral speed of the traffic participant. The turn signal identification information identifies whether the traffic participant turns on a turn signal or identifies a turning direction indicated by a turned-on turn signal. The lane line is a lane line that is of the adjacent lane and that is close to the traffic participant. The lateral speed of the traffic participant is a speed of the traffic participant relative to the lane line.

In a possible implementation, if there are a plurality of second lane change regions, the lane change region planning module 2204 is further configured to: evaluate each second lane change region based on one or more of a size of each of the plurality of second lane change regions, a speed of a vehicle adjacent to each second lane change region, a distance between each second lane change region and the ego-vehicle, or a direction of each second lane change region relative to the ego-vehicle, to obtain an evaluation value of each second lane change region; and select one of the plurality of second lane change regions as a target lane change region based on the evaluation value of each second lane change region, and control the ego-vehicle to travel to the target lane change region.

In a possible implementation, the at least one traffic participant includes a vehicle adjacent to the at least one first lane change region.

In a possible implementation, the lane change region planning module 2204 is further configured to obtain the at least one first lane region in the adjacent lane based on information about at least one obstacle, the reference lane change duration, and speed limit information. The speed limit information includes a maximum speed or a minimum speed used when the ego-vehicle travels in the adjacent lane. For example, the speed limit information may include one or more of the maximum speed or the minimum speed of the ego-vehicle or a maximum speed or a minimum speed corresponding to the adjacent lane.

In a possible implementation, the reference lane change duration obtaining module 2204 is specifically configured to obtain the reference lane change duration based on the speed of the ego-vehicle, road condition information of the adjacent lane, and a distance between the ego-vehicle and the adjacent lane. The road condition information includes one or more of the following: a road slope at which the ego-vehicle travels from the current location to the adjacent lane through lane change in a path, a road material of the adjacent lane, and the maximum speed or the minimum speed corresponding to the adjacent lane.

In a possible implementation, the apparatus further includes: a display module 2205, configured to display the at least one second lane change region on a display interface of the ego-vehicle.

In a possible implementation, the display module 2205 is further configured to: obtain input data for the display interface; and select one of the at least one second lane change region as the target lane change region based on the input data, and control the ego-vehicle to travel from the current location to the target lane change region through lane change.

In a possible implementation, the display module 2205 is further configured to further display, on the display interface of the ego-vehicle, information about an obstacle, for example, information such as a location, a size, or a shape of an obstacle such as a vehicle, a pedestrian, or a road sign.

FIG. 23 is a schematic diagram of a structure of another lane change region obtaining apparatus according to this application. The apparatus is described as follows.

The lane change region obtaining apparatus may include a processor 2301, a transceiver 2303, and a memory 2302. The processor 2301, the transceiver 2303, and the memory 2302 are connected to each other through a line. The memory 2302 stores program instructions and data.

The memory 2302 stores program instructions and data that correspond to the steps in FIG. 2 to FIG. 21C.

The processor 2301 is configured to perform the steps of the method performed by the lane change region obtaining apparatus in any one of the embodiments corresponding to FIG. 2 to FIG. 21C.

Optionally, the lane change region obtaining apparatus may further include the transceiver 2303, configured to receive or send data.

An embodiment of this application further provides a computer-readable storage medium. The computer-readable storage medium stores a program used to generate a travel speed of a vehicle. When the program is run on a computer, the computer is enabled to perform the steps in the method described in the embodiments shown in FIG. 2 to FIG. 21C.

Optionally, the lane change region obtaining apparatus shown in FIG. 23 is a chip.

An embodiment of this application further provides a lane change region obtaining apparatus. The lane change region obtaining apparatus may also be referred to as a digital processing chip or a chip. The chip includes a processing unit and a communication interface. The processing unit obtains program instructions through the communication interface. The program instructions are executed by the processing unit. The processing unit is configured to perform the steps of the method performed by the lane change region obtaining apparatus in any one of the embodiments corresponding to FIG. 2 to FIG. 21C.

This application further provides a vehicle. The vehicle includes a processor. A shielding button is further disposed in the vehicle. The processor is configured to perform the corresponding steps of the method in FIG. 2 to FIG. 21C.

An embodiment of this application further provides a digital processing chip. A circuit and one or more interfaces that are configured to implement the processor 2301 or a function of the processor 2301 are integrated into the digital processing chip. When a memory is integrated into the digital processing chip, the digital processing chip may complete the steps of the method in any one or more of the foregoing embodiments. When a memory is not integrated into the digital processing chip, the digital processing chip may be connected to an external memory through a communication interface. The digital processing chip implements, based on program code stored in the external memory, actions performed by the lane change region obtaining apparatus in the foregoing embodiments.

An embodiment of this application further provides a computer program product. When the computer program product is run on a computer, the computer is enabled to perform the steps performed by the lane change region obtaining apparatus in the method described in the embodiments shown in FIG. 2 to FIG. 21C.

The data transmission apparatus provided in embodiments of this application may be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that the chip in a server performs the data transmission methods described in the embodiments shown in FIG. 2 to FIG. 21C. Optionally, the storage unit is a storage unit in the chip, such as a register or a cache. The storage unit may alternatively be a storage unit that is located outside the chip and that is in a wireless access device, such as a read-only memory (read-only memory, ROM), another type of static storage device capable of storing static information and instructions, or a random access memory (random access memory, RAM).

Specifically, the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. A general-purpose processor may be a microprocessor, any conventional processor, or the like.

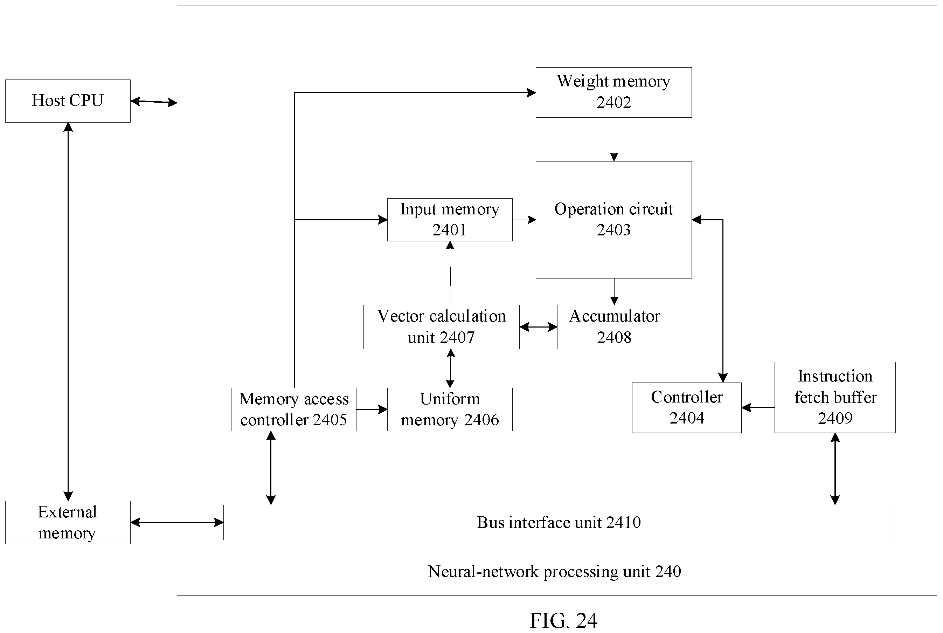

For example, FIG. 24 is a schematic diagram of a structure of a chip according to an embodiment of this application. The chip may be represented as a neural network processing unit NPU 240. The NPU 240 is mounted to a host CPU (Host CPU) as a coprocessor, and is allocated with a task by the host CPU. A core part of the NPU is an operation circuit 2403. The operation circuit 2403 is controlled by a controller 2404 to extract matrix data in a memory and perform a multiplication operation.

In some implementations, the operation circuit 2403 includes a plurality of processing engines (process engines, PEs) inside. In some implementations, the operation circuit 2403 is a two-dimensional systolic array. Alternatively, the operation circuit 2403 may be a one-dimensional systolic array or another electronic line capable of performing mathematical operations such as multiplication and addition. In some implementations, the operation circuit 2403 is a general-purpose matrix processor.

For example, it is assumed that there are an input matrix A, a weight matrix B, and an output matrix C. The operation circuit obtains data corresponding to the matrix B from a weight memory 2402, and caches the data in each PE of the operation circuit. The operation circuit obtains data of the matrix A from an input memory 2401, performs a matrix operation on the data and the matrix B, to obtain a partial result or a final result of the matrix, and stores the result in an accumulator (accumulator) 2408.

A uniform memory 2406 is configured to store input data and output data. The weight data is migrated to the weight memory 2402 by using a direct memory access controller (direct memory access controller, DMAC) 2405. The input data is also migrated to the uniform memory 2406 also by using the DMAC.

A bus interface unit (bus interface unit, Bill) 2424 is configured for interaction between an AXI bus and the DMAC and between the AXI bus and an instruction fetch buffer (instruction fetch buffer, IFB) 2409.

The bus interface unit (bus interface unit, Bill) 2424 is configured for the instruction fetch buffer 2409 to obtain an instruction from an external memory, and is further configured for the direct memory access controller 2405 to obtain original data of the input matrix A or the weight matrix B from the external memory.

The DMAC is mainly configured to migrate the input data in the external memory DDR to the uniform memory 2406, migrate the weight data to the weight memory 2402, or migrate the input data to the input memory 2401.

A vector calculation unit 2407 includes a plurality of operation processing units, and performs further processing, for example, vector multiplication, vector addition, an exponential operation, a logarithmic operation, or magnitude comparison, on an output of the operation circuit if necessary. The vector calculation unit 2407 is mainly configured to perform network calculation, for example, batch normalization (batch normalization), pixel-level summation, and upsampling on a feature plane, at a non-convolutional/fully connected layer in a neural network.

In some implementations, the vector calculation unit 2407 can store a processed output vector into the uniform memory 2406. For example, the vector calculation unit 2407 may apply a linear function and/or a non-linear function to the output of the operation circuit 2403, for example, perform linear interpolation on a feature plane extracted at a convolutional layer. For another example, the linear function and/or the non-linear function are/is applied to a vector of an accumulated value, to generate an activation value. In some implementations, the vector calculation unit 2407 generates a normalized value, a pixel-level sum value, or both. In some implementations, the processed output vector can be used as an activation input to the operation circuit 2403, for example, used in a subsequent layer in the neural network.

The instruction fetch buffer (instruction fetch buffer) 2409 connected to the controller 2404 is configured to store instructions used by the controller 2404.

The uniform memory 2406, the input memory 2401, the weight memory 2402, and the instruction fetch buffer 2409 are all on-chip memories. The external memory is private to a hardware architecture of the NPU.

Operations at various layers in the recurrent neural network may be performed by the operation circuit 2403 or the vector calculation unit 2407.

The processor mentioned above may be a general-purpose central processing unit, a microprocessor, an ASIC, or one or more integrated circuits configured to control execution of the procedures of the method in FIG. 2 to FIG. 21C.

In addition, it should be noted that the described apparatus embodiment is merely an example. The units described as separate parts may or may not be physically separated. Parts shown as units may or may not be physical modules, and may be located at one location, or may be distributed on a plurality of network units. Some or all of the modules may be selected based on an actual requirement to achieve the objective of the solution of this embodiment. In addition, in the accompanying drawing of the apparatus embodiment provided by this application, a connection relationship between the modules indicates that there are communication connections between the modules, which may be specifically implemented as one or more communication buses or signal cables.

Based on the foregoing descriptions of the implementations, a person skilled in the art may clearly understand that this application may be implemented by software in addition to necessary general-purpose hardware or by dedicated hardware, including an application-specific integrated circuit, a dedicated CPU, a dedicated memory, a dedicated component, and the like. In general, any function implemented by a computer program may be easily implemented by corresponding hardware. In addition, a same function may be implemented by various specific hardware structures, for example, an analog circuit, a digital circuit, or a dedicated circuit. However, in this application, implementation with a software program is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, or a removable hard disk of a computer, a read-only memory (read-only memory, ROM), a random access memory (random access memory, RAM), a magnetic disk, or an optical disc, and includes several instructions for instructing a computer device (which may be a personal computer, a server, or a network device) to perform the method described in embodiments of this application.

All or some of the foregoing embodiments may be implemented by software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, the processes or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and accompanying drawings of this application, terms "first", "second", "third", "fourth", and the like (if existing) are intended to distinguish between similar objects but do not necessarily indicate a specific order or sequence. It should be understood that data termed in such a way are interchangeable in proper circumstances, so that embodiments described herein can be implemented in orders other than content illustrated or described herein. In addition, terms "include" and "have" and any variants thereof are intended to cover a nonexclusive inclusion. For example, a process, method, system, product, or device that includes a list of steps or units is not necessarily limited to those expressly listed steps or units, but may include other steps or units not expressly listed or inherent to such a process, method, product, or device.

**Claims**

1.  A lane change region obtaining method, comprising:

    obtaining reference lane change duration, wherein the reference lane change duration indicates duration required for a ego-vehicle to change a lane from a current location to an adjacent lane;
    obtaining environmental information of the ego-vehicle; and
    obtaining at least one first lane change region in the adjacent lane based on the environmental information and the reference lane change duration, wherein the first lane change region is a region that is in the adjacent lane and that satisfies lane change of the ego-vehicle.

2.  The method according to claim 1, wherein after the obtaining at least one first lane change region in the adjacent lane, the method further comprises:

    obtaining information about at least one traffic participant adjacent to the at least one first lane change region;
    obtaining a probability that the at least one traffic participant occupies the at least one first lane change region; and
    selecting at least one second lane change region from the at least one first lane change region based on the probability.

3.  The method according to claim 2, wherein after the selecting at least one second lane change region from the at least one first lane change region based on the probability, the method further comprises:
    adjusting a size of the at least one second lane change region based on a speed or an acceleration of the at least one traffic participant, to obtain at least one updated second lane change region.

4.  The method according to claim 3, wherein the adjusting a size of the second lane change region comprises:

calculating, based on one or more of the speed or the acceleration of the at least one traffic participant, a speed range corresponding to the adjacent lane, a speed of the ego-vehicle, or a maximum acceleration of the ego-vehicle, a safe distance between the ego-vehicle and an adjacent vehicle after the ego-vehicle travels to each region through lane change, wherein the speed range corresponding to the adjacent lane is a range of a speed of a vehicle traveling in the adjacent lane, and the maximum acceleration of the ego-vehicle is a maximum value of an acceleration of the ego-vehicle; and

adjusting the size of the at least one second lane change region based on the safe distance, to obtain the at least one updated second lane change region.

5. The method according to any one of claims 2 to 4, wherein information about any one of the at least one traffic participant comprises one or more of the following:

turn signal identification information, a lateral distance between the traffic participant and an adjacent lane line, information about the adjacent lane line, or a lateral speed of the traffic participant, wherein the turn signal identification information identifies whether the traffic participant turns on a turn signal or identifies a turning direction indicated by a turned-on turn signal; and

the adjacent lane line is a lane line that is of the adjacent lane and that is close to the traffic participant, and the lateral speed of the traffic participant is a speed of the traffic participant relative to the adjacent lane line.

6. The method according to any one of claims 2 to 5, wherein if there are a plurality of second lane change regions, the method further comprises:

evaluating each second lane change region based on one or more of a size of each of the plurality of second lane change regions, a speed of a vehicle adjacent to each second lane change region, a distance between each second lane change region and the ego-vehicle, or a direction of each second lane change region relative to the ego-vehicle, to obtain an evaluation value of each second lane change region; and

selecting one of the plurality of second lane change regions as a target lane change region based on the evaluation value of each second lane change region, and controlling the ego-vehicle to travel to the target lane change region.

7. The method according to any one of claims 2 to 6, wherein the at least one traffic participant comprises a vehicle adjacent to the at least one first lane change region.

8. The method according to any one of claims 1 to 7, wherein the obtaining at least one first lane change region in the adjacent lane comprises:
obtaining the at least one first lane change region in the adjacent lane based on the environmental information, the reference lane change duration, and speed limit information, wherein the speed limit information comprises a maximum speed or a minimum speed used when the ego-vehicle travels in the adjacent lane.

9. The method according to any one of claims 1 to 8, wherein the obtaining reference lane change duration comprises:
obtaining the reference lane change duration based on the speed of the ego-vehicle and a distance between the ego-vehicle and a preset location in the adjacent lane.

10. The method according to claim 9, wherein the preset location is on a center line of the adjacent lane.

11. The method according to claim 9 or 10, wherein the obtaining the reference lane change duration based on the speed of the ego-vehicle and a distance between the ego-vehicle and the adjacent lane comprises:
obtaining the reference lane change duration based on one or more of the speed of the ego-vehicle, road condition information of the adjacent lane, and the distance between the ego-vehicle and the adjacent lane, wherein the road condition information comprises one or more of the following: a road slope at which the ego-vehicle travels from the current location to the adjacent lane through lane change in a path, a road material of the adjacent lane, a maximum speed or a minimum speed corresponding to the adjacent lane, and information about a lane line of the adjacent lane.

12. The method according to any one of claims 2 to 7, wherein the method further comprises: displaying the at least one second lane change region on a display interface of the ego-vehicle.

13. The method according to claim 12, wherein the method further comprises:

obtaining input data for the display interface; and

selecting one of the at least one second lane change region as the target lane change region based on the input data, and controlling the ego-vehicle to travel from the current location to the target lane change region through lane change.

14. The method according to claim 12 or 13, wherein the method further comprises:
further displaying the at least one traffic participant on the display interface of the ego-vehicle.

15. A lane change region obtaining apparatus, comprising:

a reference lane change duration obtaining module, configured to obtain reference lane change duration, wherein the reference lane change duration is duration required for a ego-vehicle to travel from a current location to an adjacent lane through lane change;

an obtaining module, configured to obtain environmental information of the adjacent lane; and

a lane change region planning module, configured to obtain at least one first lane change region in the adjacent lane based on the environmental information and the reference lane change duration, wherein the first lane change region is a region that is in the adjacent lane and that satisfies lane change of the ego-vehicle.

16. The apparatus according to claim 15, wherein

the obtaining module is further configured to: after the lane change region planning module obtains the at least one first lane change region in the adjacent lane, obtain information about at least one traffic participant adjacent to the at least one first lane change region; and

the lane change region planning module is further configured to: determine a probability that the at least one traffic participant occupies the at least one first lane change region, and select at least one second lane change region from the at least one first lane change region based on the probability.

17. The apparatus according to claim 16, wherein
the lane change region planning module is further configured to: after selecting the at least one second lane change region from the at least one first lane change region based on the probability, adjust a size of the at least one second lane change region based on a speed or an acceleration of the at least one traffic participant, to obtain at least one updated second lane change region.

18. The apparatus according to claim 17, wherein the lane change region planning module is specifically configured to:

calculate, based on one or more of the speed or the acceleration of the at least one traffic participant, a speed range corresponding to the adjacent lane, a speed of the ego-vehicle, or a maximum acceleration of the ego-vehicle, a safe distance between the ego-vehicle and an adjacent vehicle after the ego-vehicle travels to each second lane change region, wherein the speed range corresponding to the adjacent lane is a range of a speed of a vehicle traveling in the adjacent lane, and the maximum acceleration of the ego-vehicle is a maximum value of an acceleration of the ego-vehicle; and

adjust the size of the at least one second lane change region based on the safe distance, to obtain the at least one updated second lane change region.

19. The apparatus according to any one of claims 16 to 18, wherein information about any one of the at least one traffic participant comprises one or more of the following:

turn signal identification information, a lateral distance between the traffic participant and an adjacent lane line, information about the adjacent lane line, or a lateral speed of the traffic participant, wherein the turn signal identification information identifies whether the traffic participant turns on a turn signal or identifies a turning direction indicated by a turned-on turn signal; and

the adjacent lane line is a lane line that is of the adjacent lane and that is close to the traffic participant, and the lateral speed of the traffic participant is a speed of the traffic participant relative to the adjacent lane line.

20. The apparatus according to any one of claims 16 to 19, wherein if there are a plurality of second lane change regions, the lane change region planning module is further configured to:

evaluate each second lane change region based on one or more of a size of each of the plurality of second lane change regions, a speed of a vehicle adjacent to each second lane change region, a distance between each second lane change region and the ego-vehicle, or a direction of each second lane change region relative to the ego-vehicle, to obtain an evaluation value of each second lane change region; and
select one of the plurality of second lane change regions as a target lane change region based on the evaluation value of each second lane change region, and control the ego-vehicle to travel to the target lane change region.

21. The apparatus according to any one of claims 16 to 20, wherein the at least one traffic participant comprises a vehicle adjacent to the at least one first lane change region.

22. The apparatus according to any one of claims 15 to 21, wherein
the lane change region planning module is further configured to obtain the at least one first lane change region in the adjacent lane based on the environmental information, the reference lane change duration, and speed limit information, wherein the speed limit comprises a maximum speed or a minimum speed used when the ego-vehicle travels in the adjacent lane.

23. The apparatus according to any one of claims 15 to 22, wherein the reference lane change duration obtaining module is specifically configured to obtain the reference lane change duration based on the speed of the ego-vehicle and a distance between the ego-vehicle and a preset location in the adjacent lane.

24. The apparatus according to claim 23, wherein the preset location is on a center line of the adjacent lane.

25. The apparatus according to claim 23 or 24, wherein the reference lane change duration obtaining module is specifically configured to obtain the reference lane change duration based on one or more of the speed of the ego-vehicle, road condition information of the adjacent lane, and a distance between the ego-vehicle and the adjacent lane, wherein the road condition information comprises one or more of the following: a road slope at which the ego-vehicle travels from the current location to the adjacent lane through lane change in a path, a road material of the adjacent lane, a maximum speed or a minimum speed corresponding to the adjacent lane, and information about a lane line of the adjacent lane.

26. The apparatus according to any one of claims 16 to 21, wherein the apparatus further comprises:
a display module, configured to display the at least one second lane change region on a display interface of the ego-vehicle.

27. The apparatus according to claim 26, wherein the display module is further configured to:

obtain input data for the display interface; and
select one of the at least one second lane change region as the target lane change region based on the input data, and control the ego-vehicle to travel from the current location to the target lane change region through lane change.

28. The apparatus according to claim 26 or 27, wherein the display module is further configured to:
further display the at least one traffic participant on the display interface of the ego-vehicle.

29. An electronic device, used in a vehicle, wherein the electronic device comprises a display screen, a memory, and one or more processors; the memory stores code of a graphical user interface of an application; the one or more processors are configured to execute the code of the graphical user interface (GUI) stored in the memory, to display the graphical user interface on the display screen; and the graphical user interface comprises:
displaying at least one first lane change region on the display screen, wherein the at least one first lane change region is a region determined based on environmental information and reference lane change duration, the reference lane change duration is duration required for a ego-vehicle to change a lane from a current location to an adjacent lane, and the first lane change region is a region that is in the adjacent lane and that satisfies lane change of the ego-vehicle.

30. The electronic device according to claim 29, wherein the graphical user interface further comprises:
displaying, on the display screen, information about a traffic participant in the adjacent lane.

31. The electronic device according to claim 30, wherein the graphical user interface further comprises:
displaying information about at least one second lane change region on the display screen, wherein the at least one second lane change region is selected from the at least one first lane change region based on a probability, the probability is a probability that at least one traffic participant occupies the at least one first lane change region, and the at least one traffic participant is adjacent to the at least one first lane change region.

32. The electronic device according to claim 31, wherein the graphical user interface further comprises:
displaying information about the at least one traffic participant on the display screen.

33. The electronic device according to claim 31 or 32, wherein the graphical user interface further comprises:
in response to an operation on the at least one second lane change region and determining one of the at least one second lane change region as a target lane change region, displaying the target lane change region on the display screen, wherein the target lane change region is a region in which the ego-vehicle is located after the ego-vehicle travels from a current lane to the adjacent lane through lane change.

34. The electronic device according to any one of claims 31 to 33, wherein the display screen of the electronic device comprises at least one of a touchscreen, a dashboard, or a head-up display HUD.

35. A lane change region obtaining apparatus, comprising a processor, wherein the processor is coupled to a memory; the memory stores a program; and when program instructions stored in the memory are executed by the processor, the method according to any one of claims 1 to 14 is performed.

36. A computer-readable storage medium, comprising a program, wherein when the program is executed by a processing unit, the method according to any one of claims 1 to 14 is performed.

37. A vehicle, comprising a processing unit and a communication interface, wherein the processing unit obtains program instructions through the communication interface; and when the program instructions are executed by the processing unit, the method according to any one of claims 1 to 14 is implemented.

## Vehicle 100

### Travel system 102

- Engine 118
- Transmission apparatus 120
- Energy source 119
- Wheel 121

### Sensor system 104

- Global positioning system 122
- Inertial measurement unit 124
- Radar 126
- Laser rangefinder 128
- Camera 130

### Control system 106

- Steering system 132
- Accelerator 134
- Brake unit 136
- Computer vision system 140
- Route control system 142
  - Lateral planning module 1421
  - Longitudinal planning module 1422
- Obstacle avoidance system 144

### Peripheral device 108

- Wireless communication system 146
- Vehicle-mounted computer 148
- Microphone 150
- Speaker 152

### Computer system 112

- Processor 113
- Memory 114
  - Instructions 115

Power supply 110

User interface 116

FIG. 1

EP 4 316 935 A1

201 202 203 204

| Trigger lane change | → | Obtain a lane change region | → | Plan a lane change path | → | Control a current vehicle to change a lane |

FIG. 2

FIG. 3A

FIG. 3B

FIG. 4A

FIG. 4B

FIG. 4C

FIG. 5

Calculate reference lane change duration — 601

Obtain environmental information of an adjacent lane — 602

Predict, based on information about an obstacle in the adjacent lane, a location of the obstacle in the adjacent lane after the reference lane change duration — 603

Determine at least one lane change region in the adjacent lane based on the predicted location of the obstacle — 604

Determine information about an obstacle adjacent to the at least one lane change region — 605

Select one or more available lane change regions from the at least one lane change region based on the information about the obstacle adjacent to the at least one available region — 606

If there are a plurality of available lane change regions, evaluate each available lane change region — 607

Select a target lane change region from the plurality of available lane change regions based on evaluation values — 608

Plan a travel path for travel of a current vehicle to the target lane change region, and control the current vehicle to travel based on the planned travel path — 609

FIG. 6

FIG. 7

FIG. 8

FIG. 9A

FIG. 9B

FIG. 10

FIG. 11

FIG. 12A

FIG. 12B

$d_0$

1301

FIG. 13A

$d_1$

FIG. 13B

FIG. 14

FIG. 15A

1503  1502  1504

1501

FIG. 15B

1505

1503  1502  1504

1501

FIG. 15C

FIG. 16

FIG. 17

FIG. 18

FIG. 19A

1920

FIG. 19B

1920

FIG. 19C

1920

FIG. 20

FIG. 21A

FIG. 21B

FIG. 21C

EP 4 316 935 A1

FIG. 22

FIG. 23

FIG. 24

## INTERNATIONAL SEARCH REPORT

| International application No. |
|---|
| **PCT/CN2021/084772** |

**A.    CLASSIFICATION OF SUBJECT MATTER**

B60W 30/18(2012.01)i;  B60W 60/00(2020.01)i;  G08G 1/16(2006.01)i;  G08G 1/052(2006.01)i

According to International Patent Classification (IPC) or to both national classification and IPC

**B.    FIELDS SEARCHED**

Minimum documentation searched (classification system followed by classification symbols)

B60W; G08G

Documentation searched other than minimum documentation to the extent that such documents are included in the fields searched

Electronic data base consulted during the international search (name of data base and, where practicable, search terms used)

CNABS; DWPI; VEN; SIPOABS; CNKI: 变道, 时间, 时长, 预测, 区域, 自动驾驶; lane? 5d chang+, time, predict+, area, auto driving

**C.    DOCUMENTS CONSIDERED TO BE RELEVANT**

| Category* | Citation of document, with indication, where appropriate, of the relevant passages | Relevant to claim No. |
|---|---|---|
| E | CN 113631452 A (HUAWEI TECHNOLOGIES CO., LTD.) 09 November 2021 (2021-11-09) description, paragraphs 0098-0030, and claims 1-37, and figures 1-24 | 1-37 |
| X | CN 111986514 A (TENCENT TECHNOLOGY SHENZHEN CO., LTD.) 24 November 2020 (2020-11-24) description, paragraphs 115-250, and claims 1-4, and figures 1-8 | 1, 8-11, 15, 22-25, 29-30, 35-37 |
| A | CN 112416004 A (TENCENT TECHNOLOGY SHENZHEN CO., LTD.) 26 February 2021 (2021-02-26) entire document | 1-37 |
| A | CN 111267857 A (SANY HEAVY INDUSTRY CO., LTD.) 12 June 2020 (2020-06-12) entire document | 1-37 |
| A | WO 2020121215 A1 (MARELLI EUROPE S.P.A. et al.) 18 June 2020 (2020-06-18) entire document | 1-37 |
| A | US 2019279502 A1 (HERE GLOBAL B.V.) 12 September 2019 (2019-09-12) entire document | 1-37 |
| A | JP 2020163985 A (HONDA MOTOR CO., LTD.) 08 October 2020 (2020-10-08) entire document | 1-37 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2021** | **07 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/084772**

| Patent document cited in search report | | | Publication date (day/month/year) | Patent family member(s) | | | Publication date (day/month/year) |
|---|---|---|---|---|---|---|---|
| CN | 113631452 | A | 09 November 2021 | None | | | |
| CN | 111986514 | A | 24 November 2020 | None | | | |
| CN | 112416004 | A | 26 February 2021 | None | | | |
| CN | 111267857 | A | 12 June 2020 | None | | | |
| WO | 2020121215 | A1 | 18 June 2020 | IT | 201800011029 | A1 | 12 June 2020 |
| US | 2019279502 | A1 | 12 September 2019 | US | 2021125492 | A1 | 29 April 2021 |
| | | | | US | 10922965 | B2 | 16 February 2021 |
| JP | 2020163985 | A | 08 October 2020 | None | | | |

Form PCT/ISA/210 (patent family annex) (January 2015)